# EUROPEAN PATENT SPECIFICATION

(11) **EP 4 580 272 B1**
(45) Date of publication and mention of the grant of the patent: **15.04.2026**
(21) Application number: 22965424.9
(22) Date of filing: 14.11.2022
(51) Int. Cl.: H04W 72/00, H04L 5/00, H04W 72/25, H04W 52/52, H04W 64/00, H04W 72/04, H04W 72/0446, H04W 72/0453

(54) **SL PRS SENDING METHOD AND RECEIVING METHOD, DEVICE, MEDIUM, AND PRODUCT**
SLPRS-SENDEVERFAHREN UND EMPFANGSVERFAHREN, VORRICHTUNG, MEDIUM UND PRODUKT
PROCÉDÉ D'ENVOI ET PROCÉDÉ DE RÉCEPTION DE PRS SL, DISPOSITIF, SUPPORT, ET PRODUIT

(43) Date of publication of application: 02.07.2025
(73) Proprietor: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN); MA, Teng, Dongguan, Guangdong 523860 (CN)
(74) Representative: Mewburn Ellis LLP
(86) International application number: PCT/CN2022/131767
(87) International publication number: WO 2024/103231

(56) References cited:
- EP-A1- 4 072 195
- WO-A1-2021/143684
- WO-A1-2022/045798
- WO-A1-2022/165835
- WO-A1-2022/205307
- CN-A- 111 436 031
- CN-A- 111 436 131
- CN-A- 113 228 546
- ZHIHUA SHI ET AL: "Discussion on potential solutions for SL positioning", vol. RAN WG1, no. Toulouse, FR; 20221114 - 20221118, 7 November 2022 (2022-11-07), XP052222011, Retrieved from the Internet <URL:https://www.3gpp.org/ftp/TSG_RAN/WG1_RL1/TSGR1_111/Docs/R1-2211447.zip R1-2211447_OPPO_solution for SL Pos.docx> [retrieved on 20221107]
- YU DING ET AL: "Discussion on potential solutions for SL positioning", vol. RAN WG1, no. Toulouse, FR; 20221114 - 20221118, 7 November 2022 (2022-11-07), XP052221803, Retrieved from the Internet <URL:https://www.3gpp.org/ftp/TSG_RAN/WG1_RL1/TSGR1_111/Docs/R1-2211238.zip R1-2211238 Discussion on potential solutions for SL positioning.docx> [retrieved on 20221107]

## Description

### TECHNICAL FIELD

The present disclosure relates to the field of positioning signal measurement, and in particular to an SL PRS transmitting method, an SL PRS receiving method, apparatuses, a medium and a product.

### BACKGROUND

In 3rd generation partnership project (3GPP) release 17 (R17), study on 3GPP radio access network (RAN) includes "new radio (NR) positioning enhancement" and "scenarios and requirements of in-coverage, partial coverage and out-of-coverage NR positioning use cases". The study on "scenarios and requirements of in-coverage, partial coverage and ou-of-coverage NR positioning use cases" focuses on V2X and public safety use cases.

3GPP needs to research and develop sidelink positioning solutions to support the use cases, scenarios and requirements identified in these activities. In order to improve positioning accuracy, especially to achieve positioning of terminals outside the cellular network coverage, 3GPP has introduced positioning based on sidelink positioning reference signals in release 18 (R18).

CN 113228546A and WO2022165835A1 disclose a sidelink reference signal transmitting method and related products.

WO 2022045798A1 discloses a method for performing wireless communication by a first device, and an apparatus supporting same.

EP 4072195A1 discloses a method and device for a first terminal to transmit a positioning reference signal (PRS) through a physical sidelink feedback channel (PSFCH) in a wireless communication system supporting sidelink communication according to various embodiments.

R1-2211447 discusses on potential solutions for SL positioning.

### SUMMARY

The present disclosure provides an SL PRS transmitting method according to claim 1, an SL PRS receiving method according to claim 10 and apparatuses according to claims 14 and 15. The present application is defined in the appended set of claims.

It is to be understood that both the foregoing general description and the following detailed description are exemplary only, and are not restrictive of the present disclosure.

### BRIEF DESCRIPTION OF THE DRAWINGS

In order to more clearly illustrate the technical solutions in the embodiments of the present disclosure, the drawings required for the description of the embodiments will be briefly introduced below. Obviously, the drawings described below are only some embodiments of the present disclosure. The person with ordinary skills in the art may obtain other drawings based on these drawings without creative work.
FIG. 1 is a schematic diagram of a sidelink communication scenario provided by an exemplary embodiment of the present disclosure.
FIG. 2 is a schematic diagram of a sidelink communication scenario provided by another exemplary embodiment of the present disclosure.
FIG. 3 is a schematic diagram of a sidelink communication scenario provided by another exemplary embodiment of the present disclosure.
FIG. 4 is a flowchart of an SL PRS transmitting method provided by an exemplary embodiment of the present disclosure.
FIG. 5 is a flowchart of an SL PRS receiving method provided by an exemplary embodiment of the present disclosure.
FIG. 6 is a flowchart of an SL PRS communication method provided by an exemplary embodiment of the present disclosure.
FIG. 7 is a schematic diagram of a time-frequency structure provided by an exemplary embodiment of the present disclosure.
FIG. 8 is a schematic diagram of a time-frequency structure provided by another exemplary embodiment of the present disclosure.
FIG. 9 is a schematic diagram of a time-frequency structure provided by another exemplary embodiment of the present disclosure.
FIG. 10 is a schematic diagram of a time-frequency structure provided by another exemplary embodiment of the present disclosure.
FIG. 11 is a schematic diagram of a time-frequency structure provided by another exemplary embodiment of the present disclosure.
FIG. 12 is a schematic diagram of a time-frequency structure provided by another exemplary embodiment of the present disclosure.
FIG. 13 is a schematic diagram of a time-frequency structure provided by another exemplary embodiment of the present disclosure.
FIG. 14 is a schematic diagram of a time-frequency structure provided by another exemplary embodiment of the present disclosure.
FIG. 15 is a block diagram of an SL PRS transmitting apparatus provided by an exemplary embodiment of the present disclosure.
FIG. 16 is a block diagram of an SL PRS receiving apparatus provided by an exemplary embodiment of the present disclosure.
FIG. 17 is a structural diagram of a terminal provided by an exemplary embodiment of the present disclosure.

### DETAILED DESCRIPTION

In order to make the objectives, technical solutions and advantages of the present disclosure clear, the implementations of the present disclosure will be further described in detail below with reference to the drawings. Exemplary embodiments will be decscribled in detail herein, and examples thereof have been illustrated in the drawings. When the following description refers to the drawings, unless otherwise indicated, the same numbers in different drawings represent the same or similar elements. The implementations described in the following exemplary embodiments do not represent all implementations matching the present disclosure, on the contrary, they are merely examples of apparatuses and methods recited in the claims and matching some aspects of the present disclosure.

The terms used in the present disclosure is for the purpose of describing particular embodiments only and is not intended to limiting the present disclosure. As used in this disclosure and the claims, the singular forms "a," "an," and "the" are intended to include the plural forms as well unless the context explicitly indicates other meanings. It should also be understood that the term "and/or" used herein refers to and encompasses any and all possible combinations of one or more of the associated listed items.

It should be understood that although terms such as first, second, and third, may be used in the present disclosure to describe various information, such information should not be limited by such terms. These terms are merely used to distinguish the same type of information from each other. For example, without departing from the scope of the present disclosure, first information may also be referred to as second information, and similarly, second information may also be referred to as first information. Depending on the context, the term "if" as used herein may be interpreted as "when" or "in a case where" or "in response to determining".

### Sidelink communication in different network coverage scenarios

Depending on the network coverage of terminals, sidelink communication can be categorized into sidelink communication within network coverage, sidelink communication within partial network coverage, or sidelink communication out of network coverage.

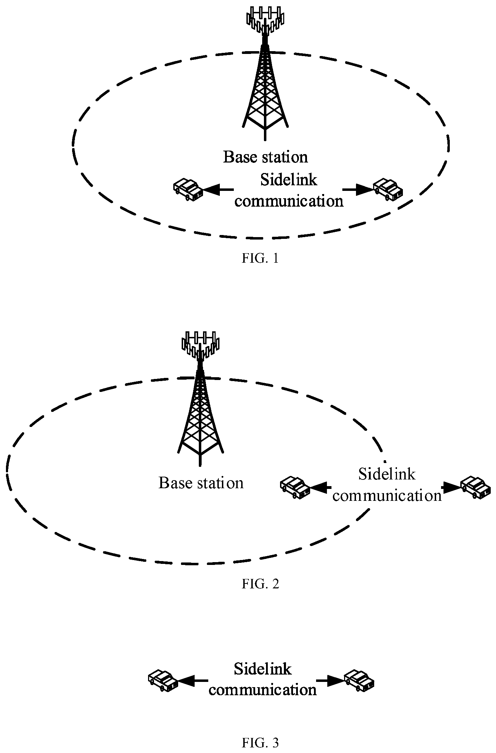

As illustrated in FIG. 1, in sidelink communication within network coverage, all terminals performing sidelink communication are inside the coverage of the same base station, which allows the above-mentioned terminals to receive configuration signaling from the base station and perform sidelink communication based on the same sidelink configuration.

As illustrated in FIG. 2, in a case of sidelink communication within partical network coverage, some terminals performing sidelink communication are inside the coverage of the base station. These terminals can receive the configuration signaling from the base station and perform sidelink communication according to the configuration of the base station. Terminals outside network coverage cannot receive the configuration signaling from the base station. In this case, the terminals outside the network coverage will determine the sidelink configuration according to pre-configuration information and information carried in an physical sidelink broadcast channel (PSBCH) transmitted by a terminal inside the network coverage, so as to perform sidelink communication.

As illustrated in FIG. 3, for sidelink communication out of network coverage, all terminals performing sidelink communication are outside network coverage, and all terminals determine sidelink configurations according to pre-configuration information to perform sidelink communication.

### Positioning based on sidelink

In 3GPP R17, study on 3GPP RAN includes "NR positioning enhancement" and "scenarios and requirements of in-coverage, partial coverage and out-of-coverage NR positioning use cases". The study on "scenarios and requirements of in-coverage, partial coverage and out-of-coverage NR positioning use cases" focused on V2X and public safety use cases, and the research findings are recorded in TR38.845. In addition, a "ranging based services" requirement has been identified for SA1 in TS22.261, and a positioning accuracy requirement for internet of things (IoT) use cases in out-of-coverage scenarios has been identified in TS22.104. 3GPP needs to research and develop sidelink positioning solutions to support the use cases, scenarios and requirements identified in these activities. In order to improve positioning accuracy, especially to achieve positioning of terminals outside the cellular network coverage, 3GPP has introduced positioning based on sidelink positioning reference signals in R18. According to the current conclusions, the sidelink positioning reference signal (SL PRS) can be transmitted through a dedicated resource pool. However, in order to support sidelink positioning and sidelink communication, the terminal also needs to transmit and receive information such as information related to sidelink positioning which includes terminal mutual discovery information, configuration information and measurement reporting information, and control and data information related to sidelink communication, and these information needs to be carried through a sidelink channel such as PSCCH and/or PSSCH.

On the sidelink, when an SL PRS and a sidelink signal/channel are transmitted in the same slot, how to multiplex the SL PRS with the sidelink signal/channel in the same slot is an unresolved issue. The present disclosure provides an SL PRS transmitting method and an SL PRS receiving method, which can solve the above technical problem.

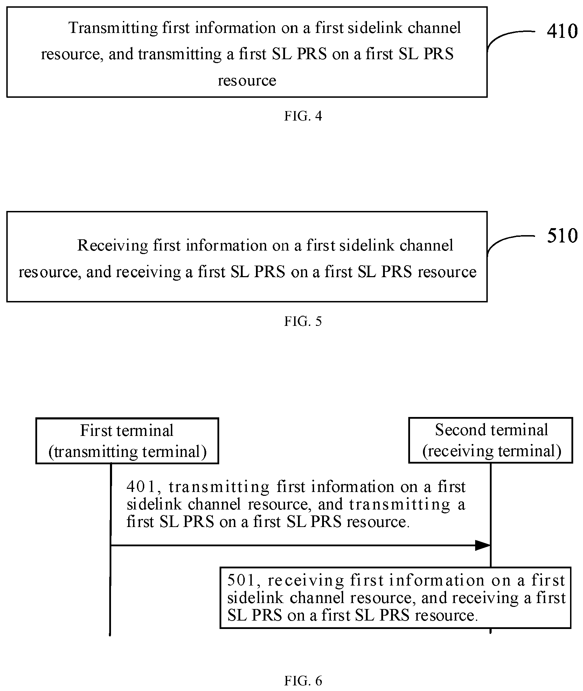

FIG. 4 illustrates a flowchart of an SL PRS transmitting method provided by an embodiment of the present disclosure. The method is performed by a first terminal. In an example where the first terminal is taken as a transmitting terminal, the method includes:
Step 401, transmitting first information on a first sidelink channel resource, and transmitting a first SL PRS on a first SL PRS resource.

The first information is used to indicate an SL PRS transmission mode on the first SL PRS resource.

Exemplarily, the first terminal performs listening on a sidelink channel in an autonomous resource selection mode, and determines the first sidelink channel resource and the first SL PRS resource associated with the first sidelink channel resource based on the idle condition of the channel obtained though the listening. The first terminal transmits the first information on the first sidelink channel resource, and transmits the first SL PRS on the first SL PRS resource according to the SL PRS transmission mode indicated by the first information.

Exemplarily, in a mode where network schedules resources, the first terminal transmits the first information on the first sidelink channel resource scheduled by the network, and transmits the first SL PRS on the first SL PRS resource scheduled by the network.

Optionally, the sidelink channel includes at least one of a physical sidelink control channel (PSCCH) or a physical sidelink shared channel (PSSCH).

In summary, based on the SL PRS transmitting method provided in this embodiment, the first terminal can perform sidelink communication with a receiving terminal through the associated first sidelink channel resource and the first SL PRS resource on the sidelink, which includes: transmitting the first information on the first sidelink channel resource, and transmitting the SL PRS on the first SL PRS resource according to the SL PRS transmission mode indicated by the first information, so that the receiving terminal performs measurement based on the sidelink positioning reference signal.

FIG. 5 illustrates a flowchart of an SL PRS receiving method provided by an embodiment of the present disclosure. The method is performed by a second terminal. In an example where the second terminal is taken as a receiving terminal, the method includes:
Step 501, receiving first information on a first sidelink channel resource, and receiving a first SL PRS on a first SL PRS resource.

The first information is used to indicate an SL PRS transmission mode on the first SL PRS resource.

Exemplarily, the second terminal performs listening on a sidelink channel, receives first information on the first sidelink channel resource, obtains the first SL PRS on the first SL PRS resource according to the SL PRS transmission mode indicated by the first information, and performs measurement on the first SL PRS.

Optionally, the sidelink channel includes at least one of a PSCCH or a PSSCH.

In summary, according to the SL PRS receiving method provided in the embodiment, the second terminal may perform sidelink communication with the transmitting terminal through the associated first sidelink channel resource and the first SL PRS resource, which includes: receiving the first information on the first sidelink channel resource, and receivoing the SL PRS on the first SL PRS resource according to the SL PRS transmission mode indicated by the first information, thereby realizing the measurement on the sidelink positioning reference signal provided by the transmitting terminal.

It should be noted that the above Step 401 and Step 501 may be included together in another embodiment, as illustrated in FIG. 6, in which the first terminal transmits the first information on the first sidelink channel resource and transmits the first SL PRS on the first SL PRS resource, and the second terminal receives the first information on the first sidelink channel resource and receives the first SL PRS on the first SL PRS resource.

The sidelink channel resources and SL PRS resources allocated for measurement on SL PRS may belong to the same sidelink resource pool, or may belong to different sidelink resource pools. For example, both the sidelink channel resources and the SL PRS resources belong to a first sidelink resource pool. Alternatively, in another example, the sidelink channel resources belong to a first sidelink resource pool, and the SL PRS resources belong to a second sidelink resource pool.

In a case where the associated sidelink channel resources and SL PRS resources belong to the same sidelink resource pool, a terminal transmits or receives an SL PRS through a time-frequency structure. The above sidelink channel resources and SL PRS resources are associated resources in the time-frequency structure, for example, the above first sidelink channel resource and the first SL PRS resource are a group of associated resources in the time-frequency structure.

In the embodiments of the present disclosure, the time-frequency structure includes n groups of associated sidelink channel resources and SL PRS resources. Depending on different configuration ways of the associated sidelink channel resources and the SL PRS resources, the time-frequency structure may include at least the following three types.

It should be noted that the time-frequency structure corresponds to one or more first time domain units in time domain, the first time domain unit includes m second time domain units, and m is an integer greater than 1. In different embodiments of the present disclosure, the first time domain unit may be at least one of a symbol set, a slot, a slot set, a subframe, or a subframe set, and the second time domain unit may be a symbol, e.g., an orthogonal frequency division multiplexing (OFDM) symbol.

In the following description of the three types of time-frequency structures, a slot is taken as the first time domain unit, and a symbol is taken as the second time domain unit.

### The first possible time-frequency structure design:

The n sidelink channel resources and n SL PRS resources in the time-frequency structure correspond to different symbols. The n sidelink channel resources correspond to the same plurality of symbols. A plurality of symbols corresponding to the same SL PRS resource are consecutive in time domain. The plurality of symbols corresponding to the n sidelink channel resources are a plurality of (i.e., at least two) consecutive symbols in the same slot.

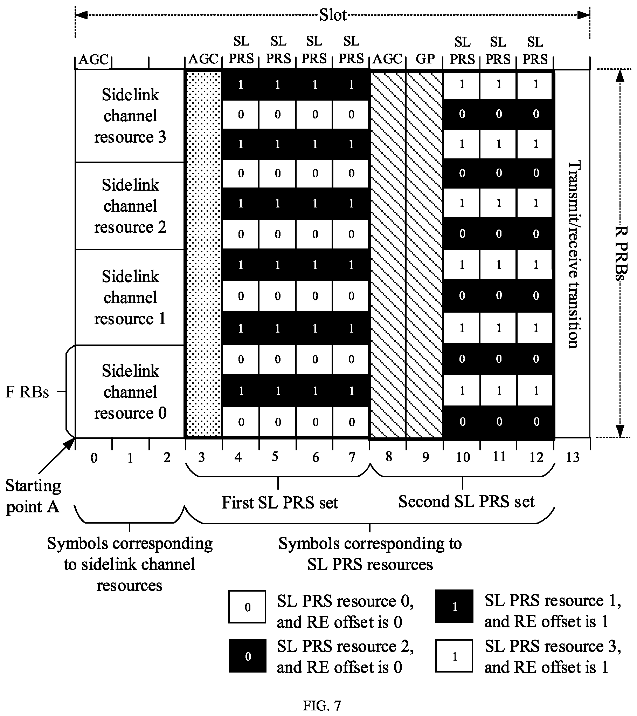

Exemplarily, the plurality of symbols corresponding to the n sidelink channel resources are a portion of symbols in a slot, and the slot to which the n sidelink channel resources belong further includes SL PRS resources. For example, as illustrated in FIG. 7, the sidelink channel resources correspond to the first three symbols in the same slot.

### Sidelink channel resources

The n sidelink channel resources correspond to different frequency domain resources, and the n sidelink channel resources correspond to the same number of frequency domain resources.

For example, as illustrated in FIG. 7, there are four sidelink channel resources, namely sidelink channel resource 0, sidelink channel resource 1, sidelink channel resource 2 and sidelink channel resource 3. The sidelink channel resource 0 corresponds to the 1st to F-th resource blocks (RBs), the sidelink channel resource 1 corresponds to the (F+1)-th to 2F-th RBs, the sidelink channel resource 2 corresponds to the (2F+1)-th to 3F-th RBs, and the sidelink channel resource 3 corresponds to the (3F+1)-th to 4F-th RBs. Each sidelink channel resource corresponds to F RBs. F is an integer greater than 1.

Optionally, a starting point of the frequency domain resources corresponding to the above n sidelink channel resources is configured by the network. Alternatively, a starting point of the frequency domain resources corresponding to the above n sidelink channel resources is pre-configured by the network. Alternatively, the starting point of the frequency domain resources corresponding to the above-mentioned n sidelink channel resources is determined based on frequency domain resources in a sidelink resource pool corresponding to the slot, for example, the first physical resource block (PRB) in the sidelink resource pool corresponding to the current slot is taken as the starting point of the frequency domain resources corresponding to the sidelink channel resources.

Optionally, the number of frequency domain resources corresponding to each of the n sidelink channel resources is configured by the network. Alternatively, the number of frequency domain resources corresponding to each sidelink channel resource is pre-configured by the network. Alternatively, the number of frequency domain resources corresponding to each sidelink channel resource is determined based on the number n and the frequency domain resources in the sidelink resource pool, for example, if the number of frequency domain resources corresponding to each sidelink channel resource is denoted as F, the frequency domain resources in the sidelink resource pool are R PRBs, and the time-frequency structure includes n sidelink channel resources, then F equals to R divided by n (i.e., F=R/n). As illustrated in FIG. 7, if n is 4, then F=R/4.

Optionally, the first symbol of the plurality of symbols corresponding to the n sidelink channel resources is used for automatic gain control (AGC). As illustrated in FIG. 7, the n sidelink channel resources correspond to the first three symbols in one slot, in which the first symbol is used for AGC.

### SL PRS resources

The above n SL PRS resources belong to one or more SL PRS sets, and SL PRS resources belonging to the same SL PRS set correspond to the same plurality of symbols. Each SL PRS set includes one or more SL PRS resources.

In a case where an SL PRS set includes a plurality of SL PRS resources, different SL PRS resources belonging to the same SL PRS set are frequency-division multiplexed or code-division multiplexed when used for transmitting an SL PRS, and SL PRS resources belonging to different SL PRS sets correspond to different plurality of symbols.

For example, as illustrated in FIG. 7, a slot includes two SL PRS sets which are a first SL PRS set and a second SL PRS set, and each SL PRS set includes two SL PRS resources. If the first SL PRS set corresponds to five symbols from symbol 3 to symbol 7, the two SL PRS resources in the first SL PRS set correspond to five symbols from symbol 3 to symbol 7. If the second SL PRS set corresponds to five symbols from symbol 8 to symbol 12, the two SL PRS resources in the second SL PRS set correspond to five symbols from symbol 8 to symbol 12.

As illustrated in FIG. 7, when the two SL PRS resources in the first SL PRS set are used for transmitting the SL PRS, the R PRBs on symbol 3 to symbol 7 are frequency-division multiplexed. When the two SL PRS resources in the second SL PRS set are used for transmitting the SL PRS, the R PRBs on symbol 8 to symbol 12 are frequency-division multiplexed.

Optionally, different SL PRS resources in the same SL PRS set have the same comb structure and different RE offsets.

For example, as illustrated in FIG. 7, SL PRS resource 0 and SL PRS resource 1 in the above first SL PRS set both have a comb structure with a comb size of 2, the resource element (RE) offset of SL PRS resource 0 is 0, and the RE offset of SL PRS resource 1 is 1. SL PRS resource 2 and SL PRS resource 3 in the above second SL PRS set both have a comb structure with a comb size of 2, the RE offset of SL PRS resource 2 is 0, and the RE offset of SL PRS resource 3 is 1.

Optionally, the first symbol of the plurality of symbols corresponding to the same SL PRS resource is used for AGC. As illustrated in FIG7, the first symbol (i.e., symbol 3) of the five symbols from symbol 3 to symbol 7 corresponding to the first SL PRS set in the slot is used for AGC, and the first symbol (i.e., symbol 8) of the five symbols from symbol 8 to symbol 12 corresponding to the second SL PRS set is used for AGC.

### Correspondence between sidelink channel resources and SL PRS resources

The above n sidelink channel resources correspond to the n SL PRS resources respectively based on their respective indexes.

For example, the indexes of the four sidelink channel resources are 0-3, respectively, and the indexes of the four SL PRS resources are (0, 0), (0, 1), (1, 0) and (1, 1), respectively. The sidelink channel resource with index 0 (i.e., sidelink channel resource 0) is associated with the SL PRS resource with index (0, 0), the sidelink channel resource with index 1 (i.e., sidelink channel resource 1) is associated with the SL PRS resource with index (0,1), the sidelink channel resource with index 2 (i.e., sidelink channel resource 2) is associated with the SL PRS resource with index (1,0), and the sidelink channel resource with index 3 (i.e., sidelink channel resource 3) is associated with the SL PRS resource with index (1, 1).

Optionally, the indexes of the n sidelink channel resources are determined according to a low-to-high order in frequency domain. As illustrated in FIG. 7, according to a low-to-high order in frequency domain, the four sidelink channel resources are indexed as 0, 1, 2, and 3, respectively.

Optionally, the n SL PRS resources are sorted based on the comb offsets first and then the set indexes, and the sorted n SL PRS resources correspond to the n sidelink channel resources. Alternatively, the n SL PRS resources are sorted based on the set indexes first and then the comb offsets, and the sorted n SL PRS resources correspond to the n sidelink channel resources.

Exemplarily, the indexes of the above four SL PRS resources, i.e., (0,0), (0,1), (1,0) and (1,1), may be understood as (comb offset, set index). Refering to FIG. 7 for illustration, (0,0) represents SL PRS resource 0 with an RE offset of 0 in the first SL PRS set with a set index of 0, (0,1) represents SL PRS resource 1 with an RE offset of 0 in the second SL PRS set with a set index of 1, (1,0) represents SL PRS resource 2 with an RE offset of 1 in the first SL PRS set with a set index of 0, and (1, 1) represents SL PRS resource 3 with an RE offset of 1 in the second SL PRS set with a set index of 1.

Alternatively, the indexes of the above four SL PRS resources, i.e., (0,0), (0,1), (1,0) and (1,1), may be understood as (set index, comb offset). Reffering to FIG. 7 for illustration, (0,0) represents SL PRS resource 0 with an RE offset of 0 in the first SL PRS set with a set index of 0, (0,1) represents SL PRS resource 1 with an RE offset of 1 in the first SL PRS set with a set index of 0, (1,0) represents SL PRS resource 2 with an RE offset of 0 in the second SL PRS set with a set index of 1, and (1, 1) represents SL PRS resource 3 with an RE offset of 1 in the second SL PRS set with a set index of 1.

The four SL PRS resources correspond to the four sidelink channel resources, respectivley, that is, SL PRS resource 0 corresponds to sidelink channel resource 0, SL PRS resource 1 corresponds to sidelink channel resource 1, SL PRS resource 2 corresponds to sidelink channel resource 2, and SL PRS resource 3 corresponds to sidelink channel resource 3.

Optionally, for each group of associated sidelink channel resource and SL PRS resource, the time domain position of the sidelink channel resource is prior to the time domain position of the SL PRS resource. For example, as illustrated in FIG. 7, the time domain positions of the sidelink channel resources are symbol 0 to symbol 2, the time domain positions of the SL PRS resources are symbol 3 to symbol 12, and the time domain positions of the sidelink channel resources are prior to the time domain positions of the SL PRS resources.

### Symbols used for transmit/receive transition

### Symbols used for transmit/receive transition are present in the time-frequency structure.

Optionally, the symbols corresponding to the n sidelink channel resources are consecutive to the symbols corresponding to the n SL PRS resources; alternatively, no symbol used for transmit/receive transition exists between the symbols corresponding to the n sidelink channel resources and the symbols corresponding to the n SL PRS resources.

That is to say, no symbols used for transmit/receive transition is present between the symbols corresponding to the sidelink channel resources and the symbols corresponding to the SL PRS resources. For example, as illustrated in FIG. 7, the next symbol after the sidelink channel resources is the first symbol occupied by the first SL PRS set, the first symbol occupied by the first SL PRS set is used for AGC, and there is no symbol used for transmit/receive transition existing between the sidelink channel resources and the first SL PRS set.

Optionally, symbols corresponding to at least two SL PRS sets are consecutive, or there is no symbol used for transmit/receive transition existing between symbols corresponding to at least two SL PRS sets.

That is to say, no symbols used for transmit/receive transition are present between SL PRS sets. For example, as illustrated in FIG. 7, the next symbol after the first SL PRS set is the first symbol occupied by the second SL PRS set. The first symbol occupied by the second SL PRS set is used for AGC, and there are no symbols used for transmit/receive transition existing between the first SL PRS set and the second SL PRS set.

In some embodiments, the last symbol in the time-frequency structure is a symbol used for transmit/receive transition; alternatively, in an autonomous resource selection mode, the last symbol in the time-frequency structure is a symbol used for transmit/receive transition.

As illustrated in FIG. 7, the last symbol of a slot is a symbol used for transmit/receive transition. Autonomous resource selection refers to that the terminal autonomously selects resources in the sidelink resource pool to transmit the SL PRS.

In some embodiments, in a mode in which the network schedules resources, if a first condition is satisfied, the last symbol in the time-frequency structure is a symbol used for transmitting or receiving the SL PRS.

Optionally, the first terminal is a transmitting terminal, and the first condition includes at least one of the following:
that the first terminal is configured to transmit an SL PRS within the last SL PRS set for the second terminal to measure reference signal time difference (RSTD); or
that an SL PRS set in the next time-frequency structure is configured for measuring RSTD.

Exemplarily, the second terminal is a receiving terminal. Network scheduling refers to that a network device schedules time-frequency resources for a terminal, for example, a base station schedules sidelink channel resources and SL PRS resources for the terminal.

### The second possible time-frequency structure design:

The n sidelink channel resources and n SL PRS resources in the time-frequency structure correspond to different symbols. The n sidelink channel resources correspond to the same plurality of symbols. A plurality of symbols corresponding to the same SL PRS resource are consecutive in time domain. The plurality of symbols corresponding to the n sidelink channel resources are all symbols in the same slot.

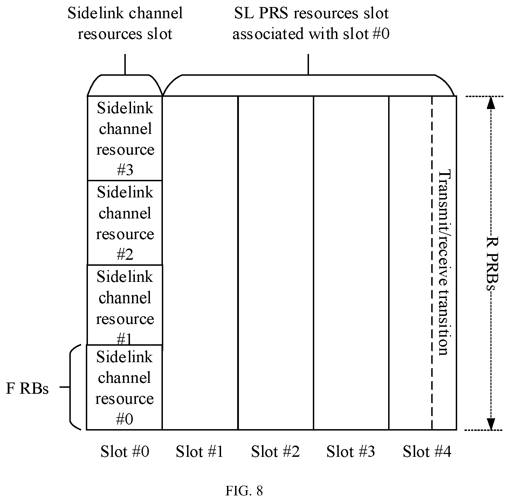

Exemplarily, the n sidelink channel resources and n SL PRS resources in the time-frequency structure correspond to different slots, and the n sidelink channel resources correspond to the same slot. The plurality of slots corresponding to the same SL PRS resource are consecutive in time domain. For example, as illustrated in FIG. 8, the n sidelink channel resources correspond to slot #0, and n SL PRS resources correspond to slots #1 to slot #4.

### Sidelink channel resources

The n sidelink channel resources correspond to different frequency domain resources, and the n sidelink channel resources correspond to the same number of frequency domain resources.

For example, as illustrated in FIG. 8, there are four sidelink channel resources, namely, sidelink channel resource #0, sidelink channel resource #1, sidelink channel resource #2 and sidelink channel resource #3. The sidelink channel resource #0 corresponds to the 1st to F-th resource blocks (RBs), the sidelink channel resource #1 corresponds to the (F+1)-th to 2F-th RB, sidelink channel resource #2 corresponds to the (2F+1)-th to 3F-th RB, and sidelink channel resource #3 corresponds to the (3F+1)-th to 4F-th RB. Each sidelink channel resource corresponds to F RBs, where F is an integer greater than 1.

Optionally, a starting point of the frequency domain resources corresponding to the above n sidelink channel resources is configured by the network. Alternatively, a starting point of the frequency domain resources corresponding to the above n sidelink channel resources is pre-configured by the network. Alternatively, the starting point of the frequency domain resources corresponding to the above-mentioned n sidelink channel resources is determined based on the frequency domain resources in a sidelink resource pool corresponding to the slot, for example, the first physical resource block (PRB) in the sidelink resource pool corresponding to the slot is taken as the starting point of the frequency domain resources corresponding to the sidelink channel resources.

Optionally, the number of frequency domain resources corresponding to each of the n sidelink channel resources is configured by the network. Alternatively, the number of frequency domain resources corresponding to each sidelink channel resource is pre-configured by the network. Alternatively, the number of frequency domain resources corresponding to each sidelink channel resource is determined based on the number n and the frequency domain resources in the sidelink resource pool, for example, if the number of frequency domain resources corresponding to each sidelink channel resource is denoted as F, the frequency domain resources in the sidelink resource pool are R PRBs, and the time-frequency structure includes n sidelink channel resources, then F equals to R divided by n (i.e., F=R/n). As illustrated in FIG. 8, if n is 4, then F=R/4.

Optionally, the first symbol of the plurality of symbols corresponding to the n sidelink channel resources is used for automatic gain control (AGC), for example, the first symbol in the slot corresponding to the n sidelink channel resources is used for AGC.

### SL PRS resources

The above n SL PRS resources belong to one or more SL PRS sets, and SL PRS resources belonging to the same SL PRS set correspond to the same plurality of symbols. In a case where an SL PRS set includes a plurality of SL PRS resources, different SL PRS resources belonging to the same SL PRS set are frequency-division multiplexed or code-division multiplexed when used for transmitting an SL PRS, and SL PRS resources belonging to different SL PRS sets correspond to different plurality of symbols.

Exemplarily, the n SL PRS resources belong to one or more slots, or the one or more SL PRS sets belong to one or more slots. For example, as illustrated in FIG. 8, n SL PRS resources occupy four slots, namely slot #1, slot #2, slot #3 and slot #4.

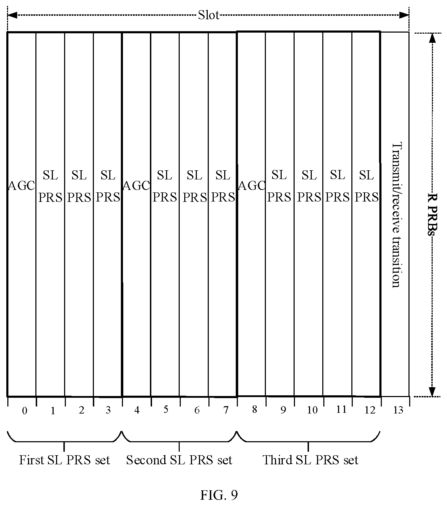

Exemplarily, as illustrated in FIG. 9, a slot includes three SL PRS sets, namely a first SL PRS set, a second SL PRS set and a third SL PRS set, and each SL PRS set is assumed to include three SL PRS resources. If the first SL PRS set corresponds to four symbols from symbol 0 to symbol 3, the three SL PRS resources in the first SL PRS set correspond to the four symbols from symbol 0 to symbol 3. If the second SL PRS set corresponds to five symbols from symbol 4 to symbol 7, the three SL PRS resources in the second SL PRS set correspond to the four symbols from symbol 4 to symbol 7. If the third SL PRS set corresponds to five symbols from symbol 8 to symbol 12, the three SL PRS resources in the third SL PRS set correspond to the four symbols from symbol 8 to symbol 12. When the three SL PRS resources in each SL PRS set are used for thransmittign the SL PRS, the R PRBs are frequency-division multiplexed.

Optionally, different SL PRS resources in the same SL PRS set have the same comb structure and different RE offsets.

For example, if it is assumed that each SL PRS set includes 3 SL PRS resources and the 3 SL PRS resources in each SL PRS set all have a comb structure with a comb size of 3, the RE offset of the first SL PRS resource in the SL PRS set is 0, the RE offset of the second SL PRS resource is 1, and the RE offset of the third SL PRS resource is 2.

Optionally, the first symbol of the plurality of symbols corresponding to the same SL PRS resource is used for AGC. As illustrated in FIG. 9, the first symbol (i.e., symbol 0) of the four symbols from symbol 0 to symbol 3 corresponding to the first SL PRS set in the slot is used for AGC, the first symbol (i.e., symbol 4) of the four symbols from symbol 4 to symbol 7 corresponding to the second SL PRS set is used for AGC, and the first symbol (i.e., symbol 8) of the five symbols from symbol 8 to symbol 12 corresponding to the third SL PRS set is used for AGC.

### Correspondence between sidelink channel resources and SL PRS resources

The above n sidelink channel resources correspond to the n SL PRS resources respectively based on their respective indexes.

For example, the indexes of the four sidelink channel resources are 0 to 3, respectively, and the indexes of the four SL PRS resources are (0, 0), (0, 1), (1, 0) and (1, 1), respectively. The sidelink channel resource with index 0 (i.e., sidelink channel resource 0) is associated with the SL PRS resource with index (0, 0), the sidelink channel resource with index 1 (i.e., sidelink channel resource 1) is associated with the SL PRS resource with index (0,1), the sidelink channel resource with index 2 (i.e., sidelink channel resource 2) is associated with the SL PRS resource with index (1,0), and the sidelink channel resource with index 3 (i.e., sidelink channel resource 3) is associated with the SL PRS resource with index (1, 1).

Optionally, the indexes of the n sidelink channel resources are determined according to a low-to-high order in frequency domain. As illustrated in FIG. 8, according to a low-to-high order in frequency domain, the four sidelink channel resources are indexed as 0, 1, 2, and 3, respectively.

Optionally, the n SL PRS resources are sorted based on the comb offsets first and then the set indexes, and the sorted n SL PRS resources correspond to the n sidelink channel resources. Alternatively, the n SL PRS resources are sorted based on the set indexes first and then the comb offsets, and the sorted n SL PRS resources correspond to the n sidelink channel resources.

Exemplarily, the indexes of the above four SL PRS resources, i.e., (0,0), (0,1), (1,0) and (1,1), may be understood as (comb offset, set index), that is, (0,0) represents SL PRS resource 0 with an RE offset of 0 in the first SL PRS set with a set index of 0, (0,1) represents SL PRS resource 1 with an RE offset of 0 in the second SL PRS set with a set index of 1, (1,0) represents SL PRS resource 2 with an RE offset of 1 in the first SL PRS set with a set index of 0, and (1,1) represents SL PRS resource 3 with an RE offset of 1 in the second SL PRS set with a set index of 1.

Alternatively, the indexes of the above four SL PRS resources, i.e., (0,0), (0,1), (1,0) and (1,1), may be understood as (set index, comb offset), that is, (0,0) represents SL PRS resource 0 with an RE offset of 0 in the first SL PRS set with a set index of 0, (0,1) represents SL PRS resource 1 with an RE offset of 1 in the first SL PRS set with a set index of 0, (1,0) represents SL PRS resource 2 with an RE offset of 0 in the second SL PRS set with a set index of 1, and (1,1) represents SL PRS resource 3 with an RE offset of 1 in the second SL PRS set with a set index of 1.

The four SL PRS resources correspond to the four sidelink channel resources, respectively, that is, SL PRS resource 0 corresponds to sidelink channel resource 0, SL PRS resource 1 corresponds to sidelink channel resource 1, SL PRS resource 2 corresponds to sidelink channel resource 2, and SL PRS resource 3 corresponds to sidelink channel resource 3.

Optionally, for each group of associated sidelink channel resource and SL PRS resource, the time domain position of the sidelink channel resource is prior to the time domain position of the SL PRS resource. For example, as illustrated in FIG. 8, the time domain positions of the sidelink channel resources are slot #0, the time domain positions of the SL PRS resources are slot #1 to slot #4, and the time domain positions of the sidelink channel resources are prior to the time domain positions of the SL PRS resource.

### Symbols used for transmit/receive transition

### Symbols used for transmit/receive transition are present in the time-frequency structure.

Optionally, the symbols corresponding to the n sidelink channel resources are consecutive to the symbols corresponding to the n SL PRS resources; alternatively, no symbol used for transmit/receive transition exists between the symbols corresponding to the n sidelink channel resources and the symbols corresponding to the n SL PRS resources.

Exemplarily, the slots corresponding to the n sidelink channel resources are consecutive to the slots corresponding to the n SL PRS resources. Alternatively, no symbol used fortransmit/receive transition exists between the slots corresponding to the n sidelink channel resources and the slots corresponding to the n SL PRS resources, for example, as illustrated in FIG. 9, the next symbol after the sidelink channel resources is the first symbol of slot #1.

Optionally, symbols corresponding to at least two SL PRS sets are consecutive; alternatively, there are no symbols used for transmit/receive transition esisting betweent the symbols corresponding to at least two SL PRS sets.

That is to say, no symbols used for transmit/receive transition are present between the SL PRS sets. For example, as illustrated in FIG. 9, the next symbol after the first SL PRS set is the first symbol occupied by the second SL PRS set, and the first symbol occupied by the second SL PRS set is used for AGC; the next symbol after the second SL PRS set is the first symbol occupied by the third SL PRS set, and the first symbol occupied by the third SL PRS set is used for AGC.

In some embodiments, the last symbol in the time-frequency structure is a symbol used for transmit/receive transition; alternatively, in an autonomous resource selection mode, the last symbol in the time-frequency structure is a symbol used for transmit/receive transition.

Exemplarily, as illustrated in FIG. 8, the last symbol of the last slot in the time-frequency structure is a symbol used for transmit/receive transition. Autonomous resource selection refers to that the terminal autonomously selects resources in the sidelink resource pool to transmit the SL PRS.

In some embodiments, in a mode in which the network schedules resources, if a first condition is satisfied, the last symbol in the time-frequency structure is a symbol used for transmitting or receiving the SL PRS.

Optionally, the first terminal is a transmitting terminal, and the first condition includes at least one of the following:
that the first terminal is configured to transmit an SL PRS within the last SL PRS set for the second terminal to measure RSTD; or
that an SL PRS set in the next time-frequency structure is configured for measuring RSTD.

Exemplarily, the second terminal is a receiving terminal. Network scheduling refers to that a network device schedules time-frequency resources for a terminal, for example, a base station schedules sidelink channel resources and SL PRS resources for the terminal.

### The third possible time-frequency structure design:

A sidelink channel resource and a SL PRS resource belonging to the same group in the time-frequency structure correspond to the same symbol set, and the symbol set includes at least three consecutive symbols. The sidelink channel resource and SL PRS resource belonging to the same group occupy different symbols in the same symbol set.

### SL PRS Resources

The above n SL PRS resources belong to one or more symbol sets. SL PRS resources belonging to the same symbol set correspond to the same symbol set, and SL PRS resources belonging to different symbol sets correspond to different symbol sets.

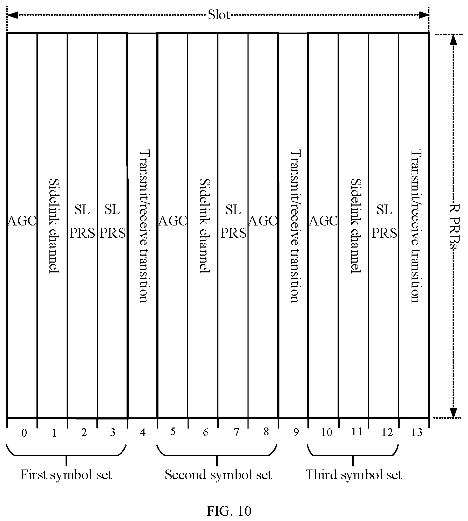

Exemplarily, as illustrated in FIG. 10, n SL PRS resources belong to three SL PRS sets, namely a first SL PRS set, a second SL PRS set and a third SL PRS set. One or more SL PRS resources in the first SL PRS set correspond to a symbol set {symbol 2, symbol 3}, one or more SL PRS resources in the second SL PRS set correspond to a symbol set {symbol 7}, and one or more SL PRS resources in the third SL PRS set correspond to a symbol set {symbol 12}.

Optionally, one or more different SL PRS resources belonging to the same symbol set are frequency-division multiplexed or code-division multiplexed when used for transmitting the SL PRS.

For example, as illustrated in FIG. 10, the first SL PRS set includes two SL PRS resources, and the two SL PRS resources are frequency-division multiplexed on symbols 2 to 3.

Optionally, different SL PRS resources in the same symbol set have the same comb structure and different RE offsets.

For example, if it is assumed that each SL PRS set includes 3 SL PRS resources and the 3 SL PRS resources in each SL PRS set all have a comb structure with a comb size of 3, the RE offset of the first SL PRS resource in the SL PRS set is 0, the RE offset of the second SL PRS resource is 1, and the RE offset of the third SL PRS resource is 2.

### Sidelink channel resources

Exemplarily, the above n sidelink channel resources belong to one or more symbol sets. For example, as illustrated in FIG. 10, the n sidelink channel resources belong to three SL PRS sets, namely the first SL PRS set, the second SL PRS set and the third SL PRS set. One sidelink channel resource in the first SL PRS set corresponds to a symbol set {symbol 1}, one sidelink channel resource in the second SL PRS set corresponds to a symbol set {symbol 6}, and one sidelink channel resource in the third SL PRS set corresponds to a symbol set {symbol 11}.

Optionally, one or more sidelink channel resources belonging to the same symbol set correspond to the same symbol or the same plurality of symbols, the one or more sidelink channel resources correspond to different frequency domain resources, and the one or more sidelink channel resources correspond to the same number of frequency domain resources.

For example, the first SL PRS set includes two sidelink channel resources, and the two sidelink channel resources correspond to different frequency domain resources on symbol 1, and the number of frequency domain resources corresponding to each of the two sidelink channel resources on symbol 1 is F.

Optionally, the number of frequency domain resources corresponding to the one or more sidelink channel resources is configured by the network. Alternatively, the number of frequency domain resources corresponding to the one or more sidelink channel resources is pre-configured by the network. Alternatively, the number of frequency domain resources corresponding to the one or more sidelink channel resources is determined based on the number of the one or more sidelink channel resources and the number of frequency domain resources in the sidelink resource pool. Exemplarily, if the number of frequency domain resources corresponding to one or more sidelink channel resources in each symbol set is denoted as F, the frequency domain resources in the sidelink resource pool are R PRBs, and the time-frequency structure includes n sidelink channel resources, then F equals to R divided by n (i.e., F=R/n). As illustrated in FIG. 10, if n is 4, then F=R/4.

Optionally, a starting point of frequency domain resources corresponding to the one or more sidelink channel resources is configured by the network. Alternatively, the starting point of frequency domain resources corresponding to the one or more sidelink channel resources is pre-configured by the network. Alternatively, the starting point of the frequency domain resources corresponding to the one or more sidelink channel resources is determined based on the frequency domain resources in a sidelink resource pool corresponding to the slot, for example, the first physical resource block (PRB) in the sidelink resource pool corresponding to the slot is taken as the starting point of the frequency domain resources corresponding to the sidelink channel resources.

### Correspondence between sidelink channel resources and SL PRS resources

One or more groups of associated sidelink channel resources and SL PRS resources are included in the same symbol set. Exemplarily, frequency domain resources corresponding to sidelink channel resources in a symbol set are the same as frequency domain resources corresponding to SL PRS resources in the same symbol set.

Optionally, one or more sidelink channel resources in a symbol set respectively correspond to one or more SL PRS resources in the same symbol set based on their respective indexes.

Optionally, indexes of the plurality of sidelink channel resources in the same symbol set are determined according to a low-to-high order in frequency domain.

Optionally, the plurality of SL PRS resources in a symbol set are sorted based on comb offsets first and then set indexes, and the sorted SL PRS resources correspond to the plurality of sidelink channel resources in the same symbol set. Alternatively, the plurality of SL PRS resources in a symbol set are sorted based on the set indexes first and then the comb offsets, and the sorted SL PRS resources correspond to the plurality of sidelink channel resources in the same symbol set.

Optionally, for the associated sidelink channel resources and SL PRS resources in a symbol set, the time domain positions of the sidelink channel resources are prior to the time domain positions of the SL PRS resources. As illustrated in FIG. 10, the time domain positions of the sidelink channel resources in the three symbol sets are all prior to the time domain positions of the SL PRS resources.

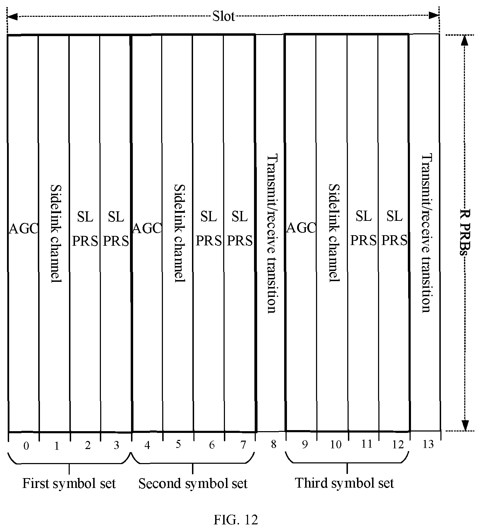

Alternatively, for the associated sidelink channel resources and SL PRS resources in a symbol set, the time domain positions of the sidelink channel resources are later than the time domain positions of the SL PRS resources. As illustrated in FIG. 12, the time domain position of the sidelink channel resource in the second symbol set is later than the time domain positions of the SL PRS resources in the second symbol set.

### Symbols used for transmit/receive transition

Optionally, symbols corresponding to one or more sidelink channel resources in a symbol set are consecutive to symbols corresponding to one or more SL PRS resources in the same symbol set. Alternatively, there are no symbols used for transmit/receive transition existing between symbols corresponding to one or more sidelink channel resources in a symbol set and symbols corresponding to one or more SL PRS resources in the same symbol set. Exemplarily, as illustrated in FIG. 10, the first symbol after the symbol corresponding to the sidelink channel resource in each of the three symbol sets is a symbol corresponding to a SL PRS resource.

In some embodiments, the next symbol after a symbol set is a symbol used for transmit/receive transition. Exemplarily, as illustrated in FIG. 10, the next symbol after the first symbol set is a symbol used for transmit/receive transition, and the next symbol after the second symbol set is a symbol used for transmit/receive transition.

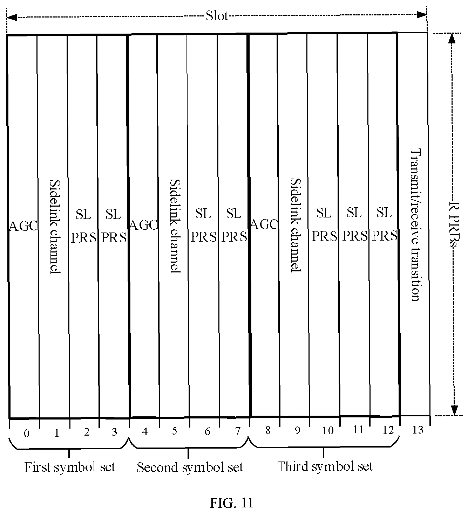

Alternatively, the next symbol after a symbol set is the first symbol in the next symbol set. Exemplarily, as illustrated in FIG. 11, the next symbol after the first symbol set is the first symbol in the second symbol set (i.e., symbol 4), and the next symbol after the second symbol set is the first symbol in the third symbol set (i.e., symbol 8).

Alternatively, in an autonomous resource selection mode, the next symbol after the symbol set is a symbol used for transmit/receive transition. Exemplarily, as illustrated in FIG. 10, the next symbol after the first symbol set (i.e., symbol 4) is a symbol used for transmit/receive transition.

In some embodiments, in a mode in which network schedules resources, if a first condition is satisfied, the next symbol after a symbol set is the first symbol in the next symbol set.

Optionally, the first terminal is a transmitting terminal, and the first condition includes at least one of the following:
that the first terminal is configured to transmit an SL PRS within the symbol set for the second terminal to measure RSTD; or
that the next symbol is configured for measuring RSTD.

### Exemplarily, the second terminal is a receiving terminal.

In some embodiments, the first symbol in a symbol set is used for AGC. Exemplarily, as illustrated in FIG. 10, the first symbols in the three symbol sets (including symbol 0, symbol 5, and symbol 10) are all used for AGC.

Optionally, the next symbol after the symbol set is configured by the network; alternatively, the next symbol after the symbol set is pre-configured by the network; alternatively, the next symbol after the symbol set is defined by a communication protocol. For example, as illustrated in FIG. 10, it is configured or pre-configured by the network or defined by a communication protocol that the next symbol after the first symbol set is a transmit/receive transition symbol. In another example, as illustrated in FIG. 11, it is configured or pre-configured by the network or defined by a communication protocol that the next symbol after the first symbol set is the first symbol of the second symbol set.

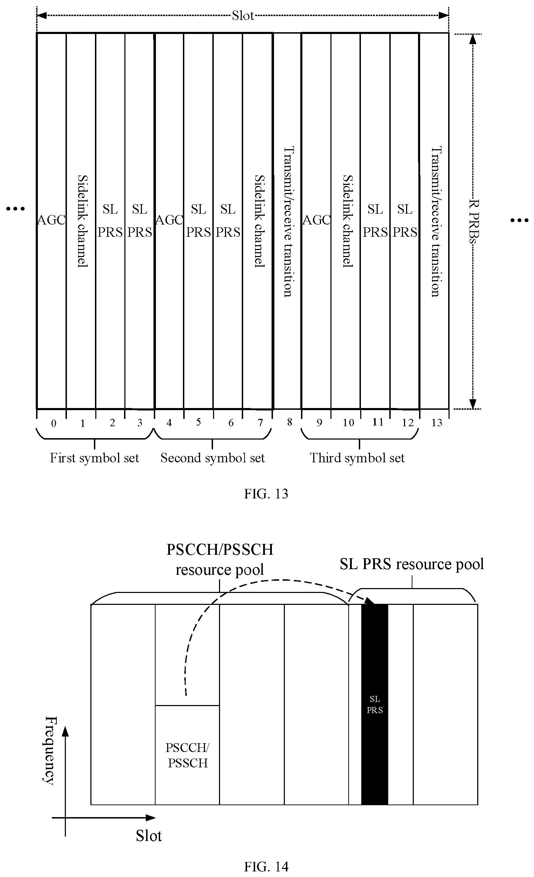

In some embodiments, if a symbol set is an even-numbered symbol set in the time-frequency structure, the second symbol in the symbol set corresponds to a sidelink channel resource, and the next symbol after the symbol set is the first symbol oin the next symbol set. Exemplarily, if a symbol set is an even-numbered symbol set in the time-frequency structure, the symbol corresponding to a sidelink channel resource in the symbol set is prior to a symbol corresponding to a SL PRS resource. As illustrated in FIG. 13, if the first symbol set is an even-numbered symbol set, then symbol 1 corresponding to the sidelink channel resource is the second symbol in the first symbol set, the next symbol after the symbol set is symbol 4, and symbol 4 is the first symbol in the second symbol set.

If a symbol set is an odd-numbered symbol set in the time-frequency structure, then the last symbol in the symbol set corresponds to a sidelink channel resource, and the next symbol after the symbol set is a symbol used for transmit/receive transition. Exemplarily, if the symbol set is an odd-numbered symbol set in the time-frequency structure, the symbol corresponding to a sidelink channel resource in the symbol set is later than a symbol corresponding to a SL PRS resource. As illustrated in FIG. 13, if the second symbol set is an odd-numbered symbol set, then symbol 7 corresponding to the sidelink channel resource is the last symbol in the second symbol set, and the next symbol after the symbol set is symbol 8, and symbol 8 is a symbol used for transmit/receive transition.

The symbol sets in the time-frequency structure are indexed from 0 according to their order in time domain.

In some embodiments, if a symbol set is an odd-numbered symbol set in the time-frequency structure, the second symbol in the symbol set corresponds to a sidelink channel resource, and the next symbol after the symbol set is the first symbol in the next symbol set. If the symbol set is an even-numbered symbol set in the time-frequency structure, the last symbol in the symbol set corresponds to a sidelink channel resource, and the next symbol after the symbol set is a symbol used for transmit/receive transition.

In summary, three time-frequency structures are provided in the embodiments of the present disclosure, each of which defines the time domain position and frequency domain position of the sidelink channel, the time domain positions and frequency domain positions of sidelink positioning reference signals, the correspondence between resources for the sidelink channel and resources for the sidelink positioning reference signals, and whether it is necessary to reserve a symbol for the transmit/receive transition between a channel and a signal or between signals. At least one of the above time-frequency structures may be used to realize the measurement on the positioning reference signal during sidelink communication between terminals.

In a case where the associated sidelink channel resources and SL PRS resources belong to different sidelink resource pools, the terminal transmits and receives an SL PRS through resources in a first sidelink resource pool and a second sidelink resource pool. The n groups of sidelink channel resources and SL PRS resources are associated resources. For example, the first sidelink channel resource in the first sidelink resource pool and the first SL PRS resource in the second sidelink resource pool are a group of associated resources in the time-frequency structure.

In the embodiments of the present disclosure, the sidelink channel resources in the first sidelink resource pool and the SL PRS resources in the second sidelink resource pool may have a structure as described below, and may be regarded as the fourth structure for SL PRS transmission.

It should be noted that the time-frequency structure corresponds to one or more first time domain units in the time domain, and the first time domain unit includes m second time domain units, where m is an integer greater than 1. In different embodiments of the present disclosure, the first time domain unit may be at least one of a symbol set, a slot, a slot set, a subframe, or a subframe set, and the second time domain unit may be a symbol, e.g., an orthogonal frequency division multiplexing (OFDM) symbol. In the following description of the three types of time-frequency structures, a slot is taken as the first time domain unit, and a symbol is taken as the second time domain unit.

### The fourth possible time-frequency structure design:

The sidelink channel resources and the SL PRS resources belong to different sidelink resource pools.

Exemplarily, the n sidelink channel resources belong to the first sidelink resource pool, and the n SL PRS resources belong to the second sidelink resource pool. As illustrated in FIG. 14, the PSCCH/PSSCH resource pool includes n sidelink channel resources, and information carried on the n sidelink channel resources may be used for associating the n sidelink channel resources with the SL PRS resources in the SL PRS resource pool.

### SL PRS Resources

The above n SL PRS resources belong to one or more SL PRS sets. A symbol used for transmit/receive transition exists between two adjacent SL PRS sets, and/or no symbols used for transmit/receive transition exist between two adjacent SL PRS sets. For example, a symbol used for transmit/receive transition exists between the first SL PRS set and the second SL PRS set, and no symbols used for transmit/receive transition exist between the second SL PRS set and the third SL PRS set.

Optionally, one or more SL PRS sets are present in the same slot, and different SL PRS sets correspond to different symbols. For example, three SL PRS sets are present in the same slot, the first SL PRS set corresponds to symbol 0 to symbol 3, the second SL PRS set corresponds to symbol 5 to symbol 8, and the third SL PRS set corresponds to symbol 10 to symbol 13.

### Sidelink channel resources

The first sidelink resource pool includes a PSCCH/PSSCH resource pool. Exemplarily, the sidelink channel resources may be located on the PSCCH, or the sidelink channel resources may be located on the PSSCH.

### Correspondence between SL PRS resources and sidelink channel resources

Exemplarily, the information carried on the sidelink channel resources is used to indicate the time-frequency positions of the SL PRS resources and the SL PRS transmission mode, which are used for transmitting an SL PRS on the SL PRS resources.

### Symbols used for transmit/receive transition

Optionally, a plurality of SL PRS sets are present in the same slot, and the last symbol in the same slot is a symbol used for transmit/receive transition. For example, three SL PRS sets are included in the same slot, the first SL PRS set corresponds to symbol 0 to symbol 3, the second SL PRS set corresponds to symbol 4 to symbol 7, and the third SL PRS set corresponds to symbol 8 to symbol 12. Symbol 13 in the slot is a symbol used for transmit/receive transition.

Optionally, a plurality of SL PRS sets are present in the same slot. The next symbol after the preceding SL PRS set of two adjacent SL PRS sets is the first symbol in the latter SL PRS set of the two adjacent SL PRS sets. For example, the next symbol after the first SL PRS set is symbol 5, and symbol 5 is the first symbol occupied by the second SL PRS set.

Alternatively, two adjacent SL PRS sets are both configured for measuring RSTD, and the next symbol after the preceding SL PRS set of the two adjacent SL PRS sets is the first symbol occupied by the latter SL PRS set of the two adjacent SL PRS sets. For example, a second SL PRS set is adjacent to a third SL PRS set, and there is a first SL PRS set prior to the second SL PRS set and the third SL PRS set. The next symbol after the first SL PRS set is the first symbol occupied by the second SL PRS set, that is, no symbol for transmit/receive transition exists between the first SL PRS set and the second SL PRS set.

Alternatively, none of two adjacent SL PRS sets is configured for measuring RSTD, and the next symbol after the preceding SL PRS set of the two adjacent SL PRS sets is a symbol for transmit/receive transition. For example, a second SL PRS set is adjacent to a third SL PRS set, and there is a first SL PRS set prior to the second SL PRS set and the third SL PRS set. The next symbol after the first SL PRS set is a symbol used for transmit/receive transition, and the next symbol after the symbol used for transmit/receive transition is the first symbol in the second SL PRS set, that is, a symbol used for transmit/receive transition is present between the first SL PRS set and the second SL PRS set.

In summary, the above structure provided in the embodiments of the present disclosure defines the time domain position and frequency domain position of the sidelink channel, the time domain positions and frequency domain positions of sidelink positioning reference signals, the correspondence between resources for the sidelink channel and resources for the sidelink positioning reference signals, and whether it is necessary to reserve a symbol for the transmit/receive transition between a channel and a signal or between signals. The above structure may be used to realize the measurement on the positioning reference signal during the sidelink communication between terminals.

Referring to FIG. 7, an example of the first time-frequency structure will be described. In the first time-frequency structure, sidelink channels and one or more SL PRSs occupy different OFDM symbols in the same slot, different sidelink channel resources occupy different RBs on the same OFDM symbol in the slot, OFDM symbols occupied by the sidelink channel are adjacent to OFDM symbols occupied by the SL PRSs, and the plurality of SL PRS symbols are adjacent to each other.

In a slot, an OFDM symbol is divided into two portions. The first C consecutive OFDM symbols of the slot are used for the sidelink channel, where the value of C may be defined by a protocol, configured by network, or pre-configured. For example, the value of C is defined by a protocol as a value within the range 2 to 4, or configured or pre-configured by the network as a value within the range 3 to 4. The first OFDM symbol of the C consecutive OFDM symbols is used for reception of UE AGC adjustment in the sidelink channel.

The starting point A of RBs available for sidelink channel transmission on the sidelink channel symbols (i.e., OFDM symbols occupied by the sidelink channel) may be:
1) as a default, the first PRB in the SL PRS resource pool in which the slot is located; or
2) configured or pre-configured by the network.

Each F RBs starting from the starting point A on the sidelink channel symbols form a sidelink channel resource, and the channel indexes sequentially increase. The value of F may be:
1) configured or pre-configured by the network; or
2) determined according to the number of SL PRS symbol sets (i.e., SL PRS sets) in a slot and the number of SL PRSs in each SL PRS symbol set that are allowed to be frequency-division multiplexed and/or code-division multiplexed. The SL PRS symbol set corresponds to one or more OFDM symbols used for transmitting an SL PRS, the OFDM symbols corresponding to the SL PRS symbol set may be consecutive or non-consecutive, and the SL PRS symbol set in a slot is configured or pre-configured by the network.

Exemplarily, the number of SL PRS symbol sets (i.e., SL PRS sets) in a slot and the number of SL PRSs allowed to be frequency-division multiplexed and/or code-division multiplexed in each SL PRS symbol set may be used for obtaining the number n.

For example, in FIG. 7, two SL PRS symbol sets exist in each slot, and only two SL PRSs are allowed to be transmitted within each set. The two SL PRSs have the same comb size but occupy different RE offsets, therefore, as illustrated in FIG. 7, a total of four SL PRSs can be transmitted in one slot. In this case, the value of F is R/4, and R is the number of RBs in the resource pool.

There is a one-to-one correspondence between sidelink channel resources on the sidelink channel symbols and SL PRS resources in the slot, and the sidelink channel transmitted on a sidelink channel resource with a certain index indicates transmission of an SL PRS on the SL PRS resource with the same index. The index of the SL PRS resource is determined in one of the following ways.

The index is determined according to RE offset first and then SL PRS symbol index. As illustrated in FIG. 7, there are two SL PRS symbol sets, the allowed comb size is 4, and the allowed RE offsets are #0 and #2, therefore, the index of the SL PRS resource having an RE offset #0/#2 in the first SL PRS symbol set is #0/#1, and the index of the SL PRS resource having an RE offset #0/#2 in the second SL PRS symbol set is #2/#3.

The index is determined according to SL PRS symbol index first and then RE offset. As illustrated in FIG. 7, there are two SL PRS symbol sets, the allowed comb size is 4, and the allowed RE offsets are #0 and #2, therefore, the index of the SL PRS resource having an RE offset #0 in the first/second SL PRS symbol set is #0/#1, and the index of the SL PRS resources having an RE offset #2 in the first/second SL PRS symbol set is #2/#3.

Since the sidelink channels used to indicate transmission of an SL PRS in this slot are all transmitted within the same time, due to the limitation of half-duplex, any UE going to transmit a sidelink channel cannot receive other sidelink channels and the indicated SL PRS that are transmitted in this slot, so it is unnecessary to perform a transmit/receive transition operation. Therefore, the next symbol after the sidelink channel symbols is the first OFDM symbol in the SL PRS symbol set, that is, no time interval for transmit/receive transition exists therebetween.

The UE should adjust the transmit power of the sidelink channel and the transmit power of the SL PRS to obviate the RF conversion time between the transmission of sidelink channel and the transmission of SL PRS, thereby avoiding configuring symbols for the transmit/receive transition between symbols corresponding to the sidelink channel and symbols corresponding to the SL PRS.

If symbols for transmit/receive transition are not configured between symbols corresponding to the sidelink channel and symbols corresponding to the SL PRS, the resource waste caused by the introduce of additional transmit/receive transition gaps.

Since the sidelink channels used to indicate transmission of SL PRSs in this slot are all transmitted within the same time, due to the limitation of half-duplex, any UE going to transmit a sidelink channel cannot receive other sidelink channels and the indicated SL PRSs that are transmitted in this slot, so it is unnecessary to perform a transmit/receive transition operation. Therefore, two adjacent SL PRS symbol sets in this slot occupy consecutive OFDM symbols, that is, there is no time interval for transmit/receive transition exsiting between two adjacent SL PRS symbol sets.

The last OFDM symbol in a slot may be used in one of the following ways.
1) The first way: always used for transmit/receive transition.
2) The second way:
   - if an UE autonomous resource selection mode is applied to the current resource pool for SL PRS resource selection for SL PRS transmission, since any UE needs to perform channel listening to select the transmission resource, the symbol is used for transmit/receive transition; or
   - if a mode in which the network schedules resources is applied to the resource pool for SL PRS resource selection, then:
      for a transmitting UE, the UE transmits an SL PRS on the last OFDM symbol when at least one of the following conditions is satisfied:
         1> if the UE is configured to transmit an SL PRS within the last SL PRS symbol set for other UEs to measure RSTD;
         2> the SL PRS symbol set in the next slot is also configured for UEs to measure RSTD.
      for a receiving UE, when at least one of the following conditions is satisfied, it is considered that SL PRS transmission exists on the last OFDM symbol, and the UE decides whether to receive the SL PRS on the symbol based on its own implementation:
         1> if the receiving UE is configured to use the last SL PRS symbol set for measuring RSTD;
         2> if the UE is configured to transmit an SL PRS within the last SL PRS symbol set for other UEs to measure RSTD;
         3> the SL PRS symbol set in the next slot is also configured for UEs to measure RSTD.

Reffering to FIG. 8 and FIG. 9, an example of the second time-frequency structure will be described. In the second time-frequency structure, a sidelink channel that indicates transmission of an SL PRS is transmitted in a specific slot in a resource pool, and the indicated SL PRS is located in one or more slots belonging to the resource pool, which are called SL PRS slots (slots corresponding to SL PRS resources) associated with a sidelink channel slot (slot corresponding to sidelink channel resources). Different sidelink channels occupy different PRBs in the slot. The last OFDM symbol of the slot occupied by a sidelink channel and the last OFDM symbol of the last SL PRS slot associated with the sidelink channel are used for transmit/receive transition. The other OFDM symbols of SL PRS slots associated with the sidelink channel are not symbols used for transmit/receive transition.

As illustrated in FIG. 8, in this embodiment, since sidelink channels transmitted in a sidelink channel slot occupy the same time resources, due to the limitation of half-duplex, any UE going to transmit a sidelink channel cannot receive an SL PRS in SL PRS slots associated with the slot, so it is unnecessary to perform a transmit/receive transition operation. Therefore, it is unnecessary to reserve OFDM symbols for transmit/receive transition except the last OFDM symbol of the last SL PRS slot associated with the sidelink channel.

It should be noted that a plurality of SL PRS symbol sets may be present in an SL PRS slot associated with the sidelink channel slot, as illustrated in FIG. 9 (corresponding to slot 4 in FIG. 8), and there is no transmit/receive transition gap existing between different symbol sets.

In the time-frequency structure in this embodiment, there is no OFDM symbol for transmit/receive transition reserved between symbols corresponding to the sidelink channel resources and symbols corresponding to the SL PRS resources or between symbols corresponding to SL PRS resources, which may avoid the resource waste caused by the introduce of additional transmit/receive transition gaps.

Reffering to FIG. 10 to FIG. 13, an example of the third time-frequency structure will be described. In the third time-frequency structure, sidelink channels and one or more SL PRSs occupy different OFDM symbols in the same slot, different sidelink channels occupy different OFDM symbols or different RBs in the slot, OFDM symbols occupied by the sidelink channels are adjacent to OFDM symbols occupied by the SL PRS, and the plurality of SL PRS symbols are adjacent to each other.

In this embodiment, the OFDM symbols in the slot are divided into a plurality of symbol sets, each symbol set is used for transmitting an SL PRS and a sidelink channel used to indicate the SL PRS.

The first symbol in each symbol set is used for AGC adjustment.

One or more OFDM symbols in each symbol set are used for sidelink channel transmission. Exemplarily, in an example where one OFDM symbol is used for sidelink channel transmission, the number of RBs occupied by the sidelink channel may be:
1) configured or pre-configured by the network; or
2) determined according to the number of SL PRSs in the symbol set that are allowed to be frequency-division multiplexed and/or code-division multiplexed.

For example, only two SL PRSs are allowed to be transmitted in a symbol set. The two SL PRSs have the same comb size but occupy different RE offsets. For example, the number of RBs occupied by the sidelink channel is half of the number of RBs occupied by the SL PRS.

There is a one-to-one correspondence between sidelink channel resources on sidelink channel symbols (symbols occupied by sidelink channels) and SL PRS resources in the slot. The sidelink channel transmitted on a sidelink channel resource with a certain index indicates transmission of an SL PRS on the SL PRS resource with the same index. The indexes of sidelink channels are determined according to a high-to-low order of their frequency domain positions, and the indexes of SL PRS resources are determined according to RE offsets.

For the next OFDM symbol after a symbol set, one of the following schemes may be employed.

In some optional embodiments, if an UE autonomous resource selection mode is applied to the current resource pool for SL PRS resource selection for SL PRS transmission, since any UE needs to perform channel listening to select transmission resources, the next OFDM symbol is a symbol used for transmit/receive transition. If a mode in which the network schedules resources is applied to the resource pool for SL PRS resource selection, then:
1) for a transmitting UE, if the UE is configured to transmit an SL PRS within the symbol set for other UEs to measure RSTD, the next symbol set is also used for other UEs to measure RSTD. Since the UE only transmits SL PRSs, the next OFDM symbol is the first OFDM symbol in the next symbol set; otherwise, the next OFDM symbol is a transmit/receive transition symbol (i.e., a symbol used for transmit/receive transition);
2) for a receiving UE, if the UE is configured to measure RSTD based on the SL PRS transmitted within the symbol set, the next OFDM symbol is the first OFDM symbol in the next symbol set; otherwise, the next OFDM symbol is a transmit/receive transition symbol, and the UE decides whether to receive the SL PRS on the last OFDM symbol in the symbol set based on its own implementation.

In this embodiment, when the symbol set is used for RSTD measurement, the resource waste caused by the introduce of additional transmit/receive transition gap can be avoided.

In some optional embodiments, the next OFDM symbol is the first OFDM symbol in the next symbol set, as illustrated in FIG. 11, that is, the UE that uses the slot to transmit/receive SL PRSs only performs a transmission/reception operation in the slot.

In this embodiment, the resource waste caused by transmit/receive transition symbols can be minimized.

In some optional embodiments, depending on resource pool configuration, or pre-configuration, or definition in a communication protocol, for different symbol sets, the next OFDM symbol is the first OFDM symbol in the next symbol set or a symbol used for transmit/receive transition, as illustrated in FIG. 12.

In this embodiment, the resource waste caused by transmit/receive transition symbols may be reduced, and the reception failure due to half-duplex may also be reduced.

In some optional embodiments, as illustrated in FIG. 13, the symbol sets in the slot are indexed from 0 in a time order. If a symbol set is an even-numbered symbol set in the slot, the second OFDM symbol in the symbol set is used to transmit the sidelink channel that indicates the SL PRS transmission in the symbol set, and the next OFDM symbol after the symbol set is the first OFDM symbol in the next symbol set. If a symbol set is an odd-numbered symbol set in the slot, the last OFDM symbol in the symbol set is used to transmit a sidelink channel that indicates SL PRS transmission in the symbol set, and the next OFDM symbol after the symbol set is a transmit/receive transition symbol.

In this embodiment, the effects of the transmit/receive transition on the transmission or reception of sidelink channels may be avoided.

Referring to FIG. 14, an example of the fourth structure will be described. In the fourth structure, an SL PRS and the sidelink channel that indicates the transmission of the SL PRS are transmitted in different resource pools. One or more SL PRS symbol sets exist in the slot in which the SL PRS is located. A transmit/receive transition gap (including symbols used for transmit/receive transition) may exist or not exist between different SL PRS symbol sets.

As illustrated in FIG. 14, the sidelink channel that indicates the transmission of an SL PRS is transmitted in an sidelink communication resource pool (i.e., the first sidelink resource pool), and in any slot in the SL PRS resource pool (i.e., the second sidelink resource pool), there may be one or more SL PRS symbol sets, as illustrated in FIG. 14.

In some optional embodiments, in an SL PRS slot, the last OFDM symbol is used for transmit/receive transition. In addition, the next OFDM symbol after an SL PRS symbol set is the first OFDM symbol in the next SL PRS symbol set, that is, no transmit/receive transition gap exists between adjacent SL PRS symbol sets, which may avoid the resource caused by the introduce of additional transmit/receive transition gaps.

In some optional embodiments, in an SL PRS slot, the last OFDM symbol is used for transmit/receive transition. In addition, if adjacent SL PRS symbol sets in the slot are all configured for a terminal to measure RSTD, the next OFDM symbol after the preceding SL PRS symbol set is the first OFDM symbol in the next SL PRS symbol set, that is, there is no transmit/receive transition gap existing between adjacent SL PRS symbol sets. Otherwise, the next OFDM symbol after an SL PRS symbol set is a symbol used for transmit/receive transition.

In this embodiment, when an SL PRS symbol set is used for RSTD measurement, the UE going to transmit an SL PRS does not need to receive an SL PRS, so it is unecessary to introduce additional transmit/receive transition gaps which may cause resource waste. In other cases, the transmit/receive transition gaps may allow the UE to receive an SL PRS transmitted by other UEs in the slot.

In summary, the present disclosure provides a multiplexing mode of SL PRSs and other sidelink channels/signals. According to the method proposed in the present disclosure, if sidelink channels that indicate the transmission of a plurality of SL PRSs occupy the same time resources, and the plurality of SL PRSs occupy different OFDM symbols, these OFDM symbols may be adjacent to each other, and if a plurality of SL PRS symbol sets are used for RSTD measurement, the plurality of SL PRS symbol sets may also occupy consecutive OFDM symbols. The method proposed in the present disclosure may avoid resource waste caused by the introduce of additional transmit/receive transition gaps. In addition, the requirement for the UE to receive and transmit SL PRSs is also considered in the method, which is beneficial to improving the resource utilization of the SL positioning system and positioning accuracy of the UE.

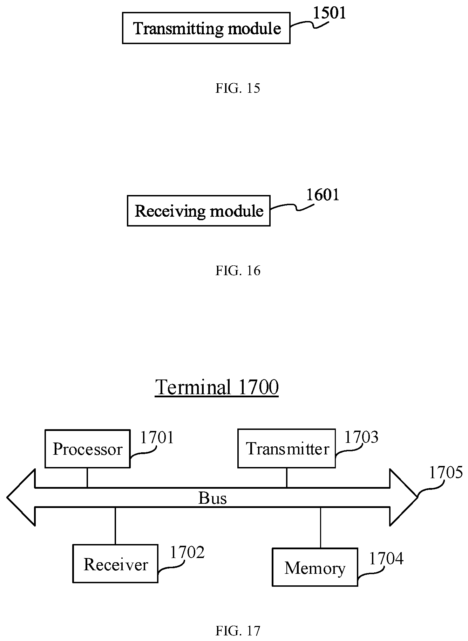

FIG. 15 is a block diagram of an SL PRS transmitting apparatus provided by an embodiment of the present disclosure. The apparatus may be implemented as part or all of a first terminal, and the apparatus includes:
a transmitting module 1501, configured to transmit first information on a first sidelink channel resource, and transmit a first SL PRS on a first SL PRS resource.

The first information is used to indicate an SL PRS transmission mode on the first SL PRS resource.

In the embodiment,
the first sidelink channel resource and the first SL PRS resource are a group of associated resources in a time-frequency structure; and
the time-frequency structure includes n groups of associated sidelink channel resources and SL PRS resources, where n is an integer greater than 1.

In the embodiment,
the time-frequency structure corresponds to one or more first time domain units in time domain, and each first time domain unit includes m second time domain units, where m is an integer greater than 1;
the n sidelink channel resources and the n SL PRS resources in the time-frequency structure correspond to different second time domain units; and
the n sidelink channel resources correspond to the same plurality of second time domain units, and a plurality of second time domain units corresponding to the same SL PRS resource are consecutive in time domain.

In some optional embodiments, the n sidelink channel resources correspond to different frequency domain resources, and the n sidelink channel resources all correspond to the same number of frequency domain resources.

In some optional embodiments, a starting point of frequency domain resources corresponding to the n sidelink channel resources is configured by network, or pre-configured by network, or determined based on frequency domain resources in the sidelink resource pool corresponding to the slot.

In some optional embodiments, the number of frequency domain resources corresponding to each sidelink channel resource is configured by network, or pre-configured by network, or determined based on the number n and the frequency domain resources in the sidelink resource pool.

In some optional embodiments, the first second time domain unit of the plurality of second time domain units corresponding to the n sidelink channel resources is used for automatic gain control (AGC), and the first second time domain unit of the plurality of second time domain units corresponding to the same SL PRS resource is used for AGC.

In the embodiment,
the n SL PRS resources belong to one or more SL PRS sets.
SL PRS resources belonging to the same SL PRS set correspond to the same plurality of second time domain units, and different SL PRS resources belonging to the same SL PRS set are frequency-division multiplexed or code-division multiplexed when used for transmitting an SL PRS;
SL PRS resources belonging to different SL PRS sets correspond to different plurality of second time domain units.

In some optional embodiments, different SL PRS resources in the same SL PRS set have the same comb structure and different RE offsets.

In some optional embodiments, the n sidelink channel resources corresponds to the n SL PRS resources respectively based on their respective indexes.

In some optional embodiments, the indexes of the n sidelink channel resources are determined according to a low-to-high in frequency domain.

In some optional embodiments, the n SL PRS resources are sorted based on comb offsets first and then set indexes, and sorted n SL PRS resources correspond to the n sidelink channel resources;
alternatively, the n SL PRS resources are sorted based on the set indexes first and then the comb offsets, and the sorted n SL PRS resources correspond to the n sidelink channel resources.

In some optional embodiments, the plurality of second time domain units corresponding to the n sidelink channel resources are at least two consecutive second time domain units in the same first time domain unit;
alternatively, the plurality of second time domain units corresponding to the n sidelink channel resources are all second time domain units in the same first time domain unit.

In some optional embodiments, the second time domain units corresponding to the n sidelink channel resources are consecutive to the second time domain units corresponding to the n SL PRS resources;
alternatively, the second time domain unit corresponding to the n sidelink channel resources and the second time domain unit corresponding to the n SL PRS resources do not include the second time domain unit used for transmit/receive transition.

In some optional embodiments, the second time domain units corresponding to at least two SL PRS sets are consecutive;
alternatively, no second time domain unit used for transmit/receive transition exists between the second time domain units corresponding to at least two SL PRS sets.

In some optional embodiments, the last second time domain unit in the time-frequency structure is a second time domain unit used for transmit/receive transition;
alternatively, in the autonomous resource selection mode, the last second time domain unit in the time-frequency structure is a second time domain unit used for transmit/receive transition.

In some optional embodiments, in a mode in which network schedules resources, in a case where a first condition is satisfied, the last second time domain unit in the time-frequency structure is a second time domain unit used for transmitting or receiving SL PRS.

In some optional embodiments, the first terminal is a transmitting terminal, and the first condition includes at least one of the following:
that the first terminal is configured to transmit an SL PRS within the last SL PRS set for the second terminal to measure RSTD; or
that an SL PRS set in the next time-frequency structure is configured for measuring RSTD.

In some optional embodiments, the time-frequency structure corresponds to one or more first time domain units in time domain, and each first time domain unit includes m second time domain units, where m is an integer greater than 1;
a sidelink channel resource and a SL PRS resource belonging to the same group in the time-frequency structure correspond to the same second time domain unit set, and the second time domain unit set includes at least three consecutive second time domain units; and
the sidelink channel resource and SL PRS resource belonging to the same group occupy different second time domain units in the second time domain unit set.

In some optional embodiments, the first second time domain unit in the second time domain unit set is used for AGC.

In some optional embodiments, the n SL PRS resources belong to at least two second time domain unit sets; and
SL PRS resources belonging to the same second time domain unit set correspond to the same second time domain unit set, and SL PRS resources belonging to different second time domain unit sets correspond to different second time domain unit sets.

In some embodiments, one or more groups of associated sidelink channel resources and SL PRS resources exist in the same second time domain unit set;
one SL PRS resource or a plurality of different SL PRS resources belonging to the same second time domain unit set are frequency-division multiplexed or code-division multiplexed when used for transmitting an SL PRS; and
one or more sidelink channel resources belonging to the same second time domain unit set correspond to the same second time domain unit or the same plurality of second time domain units, at least two sidelink channel resources correspond to different frequency domain resources, and the at least two sidelink channel resources correspond to the same number of frequency domain resources.

In some optional embodiments, the number of frequency domain resources corresponding to one or more sidelink channel resources is configured by network, or pre-configured by network, or determined based on the number of the one or more sidelink channel resources and the number of frequency domain resources in the sidelink resource pool.

In some optional embodiments, different SL PRS resources in the same second time domain unit set have the same comb structure and different RE offsets.

In some optional embodiments, the one or more sidelink channel resources respectively correspond to the one or more SL PRS resources in the same second time domain unit set based on their respective indexes.

In some optional embodiments, the second time domain units corresponding to one or more sidelink channel resources are consecutive to the second time domain units corresponding to one or more SL PRS resources in the same second time domain unit set;
alternatively, no second time domain unit used for transmit/receive transition exists between second time domain units corresponding to the one or more sidelink channel resources and the second time domain units corresponding to one or more SL PRS resources in the same second time domain unit set.

In some optional embodiments, the next second time domain unit after the second time domain unit set is a second time domain unit used for transmit/receive transition;
alternatively, the next second time domain unit after the second time domain unit set is the first second time domain unit in the next second time domain unit set.
alternatively, in an autonomous resource selection mode, the next second time domain unit after the second time domain unit set is a second time domain unit used for transmit/receive transition.

In some optional embodiments, in a mode in which network schedules resources, in a case where a first condition is satisfied, the next second time domain unit after the second time domain unit set is the first second time domain unit in the next second time domain unit set.

In some optional embodiments, the first terminal is a transmitting terminal, and the first condition includes at least one of the following:
that the first terminal is configured to transmit an SL PRS within the second time domain unit set for the second terminal to measure RSTD; or
that the next second time domain unit set is configured for measuring RSTD.

In some optional embodiments, the next second time domain unit after the second time domain unit set is configured by network, or pre-configured by network, or defined by a communication protocol.

In some optional embodiments, if the second time domain unit set is an even-numbered second time domain unit set in the time-frequency structure, the second second time domain unit in the second time domain unit set corresponds to a sidelink channel resource, and the next second time domain unit after the second time domain unit set is the first second time domain unit in the next second time domain unit set;
if the second time domain unit set is an odd-numbered second time domain unit set in the time-frequency structure, the last second time domain unit in the second time domain unit set corresponds to asidelink channel resource, and the next second time domain unit after the second time domain unit set is a second time domain unit used for transmit/receive transition;
second time domain unit sets in the time-frequency structure are indexed from 0 according to their order in time domain.

In some optional embodiments, the n groups of associated sidelink channel resources and SL PRS resources belong to the same sidelink resource pool.

In some optional embodiments, the n sidelink channel resources belong to the first sidelink resource pool, and the n SL PRS resources belong to the second sidelink resource pool.

In some optional embodiments, the n SL PRS resources belong to one or more SL PRS sets; and
a second time domain unit used for transmit/receive transition exists between two adjacent SL PRS sets, and/or no second time domain unit used for transmit/receive transition exists between two adjacent SL PRS sets.

In some optional embodiments, one or more SL PRS sets exist in the same first time domain unit, and different SL PRS sets correspond to different second time domain units.

In some optional embodiments, a plurality of SL PRS sets exist in the same first time domain unit; and
the last second time domain unit in the same first time domain unit is a second time domain unit used for transmit/receive transition.

In some optional embodiments, a plurality of SL PRS sets exist in the same first time domain unit;
the next second time domain unit after the preceding SL PRS set of two adjacent SL PRS sets is the first second time domain unit occupied by the later SL PRS set of the two adjacent SL PRS sets;
alternatively, two adjacent SL PRS sets are both configured for measuring RSTD, and the next second time domain unit after the preceding SL PRS set of the two adjacent SL PRS sets is the first second time domain unit occupied by the later SL PRS set set of the two adjacent SL PRS sets;
alternatively, none of the two adjacent SL PRS sets is configured for measuring RSTD, and the next second time domain unit after the preceding SL PRS set of the two adjacent SL PRS sets is a second time domain unit used for transmit/receive transition.

FIG. 16 is a block diagram of an SL PRS receiving apparatus provided by an embodiment of the present disclosure. The apparatus can be implemented as part or all of a second terminal, and the apparatus includes:
a receiving module 1601, configured to receive first information on a first sidelink channel resource, and receive a first SL PRS on a first SL PRS resource.

The first information is used to indicate an SL PRS transmission mode on the first SL PRS resource.

In the embodiment,
the first sidelink channel resource and the first SL PRS resource are a group of associated resources in a time-frequency structure;
the time-frequency structure includes n groups of associated sidelink channel resources and SL PRS resources, where n is an integer greater than 1.

In the embodiment,
the time-frequency structure corresponds to one or more first time domain units in time domain, and each first time domain unit includes m second time domain units, where m is an integer greater than 1;
n sidelink channel resources and n SL PRS resources in the time-frequency structure correspond to different second time domain units; and
the n sidelink channel resources correspond to the same plurality of second time domain units, and a plurality of second time domain units corresponding to the same SL PRS resource are consecutive in time domain.

In the embodiment,
the n sidelink channel resources correspond to different frequency domain resources, and the n sidelink channel resources correspond to the same number of frequency domain resources.

In some optional embodiments, a starting point of frequency domain resources corresponding to the n sidelink channel resources is configured by network, or pre-configured by network, or determined based on the frequency domain resources in the sidelink resource pool corresponding to the first time domain unit.

In some optional embodiments, the number of frequency domain resources corresponding to each sidelink channel resource is configured by network, or pre-configured by network, or determined based on the number n and the frequency domain resources in the sidelink resource pool.

In some optional embodiments, the first second time domain unit of the plurality of second time domain units corresponding to the n sidelink channel resources is used for AGC, and the first second time domain unit of the plurality of second time domain units corresponding to the same SL PRS resource is used for AGC.

In the embodiment,
the n SL PRS resources belong to one or more SL PRS sets;
SL PRS resources belonging to the same SL PRS set correspond to the same plurality of second time domain units, and different SL PRS resources belonging to the same SL PRS set are frequency-division multiplexed or code-division multiplexed when used for transmitting an SL PRS; and
SL PRS resources belonging to different SL PRS sets correspond to different plurality of second time domain units.

In some optional embodiments, different SL PRS resources in the same SL PRS set have the same comb structure and different resource element (RE) offsets.

In some optional embodiments, the n sidelink channel resources correspond to the n SL PRS resources respectively based on their respective indexes.

In some optional embodiments, the n sidelink channel resources are indexed in a low-to-high order in frequency domain.

In some optional embodiments, the n SL PRS resources are sorted based on comb offsets first and then set indexes, and sorted n SL PRS resources correspond to the n sidelink channel resources;
alternatively, the n SL PRS resources are sorted based on the set indexes first and then the comb offsets, and sorted n SL PRS resources correspond to the n sidelink channel resources.

In some optional embodiments, the plurality of second time domain units corresponding to the n sidelink channel resources are at least two consecutive second time domain units in the same first time domain unit;
alternatively, the plurality of second time domain units corresponding to the n sidelink channel resources are all second time domain units in the same first time domain unit.

In some optional embodiments, the second time domain unit corresponding to the n sidelink channel resources are consecutiv to the second time domain units corresponding to the n SL PRS resources;
alternatively, no second time domain unit used for transmit/receive transition exists between the second time domain units corresponding to the n sidelink channel resources.

In some optional embodiments, the second time domain units corresponding to at least two SL PRS sets are consecutive;
alternatively, no second time domain unit used for transmit/receive transition exists between symbols corresponding to at least two SL PRS sets.

In some optional embodiments, the last second time domain unit in the time-frequency structure is a second time domain unit used for transmit/receive transition;
alternatively, in an autonomous resource selection mode, the last second time domain unit in the time-frequency structure is a second time domain unit used for transmit/receive transition.

In some optional embodiments, in a mode in which network schedules resources, in a case where the second condition is satisfied, the last second time domain unit in the time-frequency structure is a second time domain unit used for transmitting or receiving an SL PRS.

In some optional embodiments, the second terminal is a receiving terminal, and the second condition includes at least one of the following:
that the second terminal is configured to receive the SL PRS within the last SL PRS set for measuring RSTD; or
that an SL PRS set in the next time-frequency structure is configured for measuring RSTD.

In some optional embodiments, the time-frequency structure corresponds to one or more first time domain units in time domain, and each the first time domain unit includes m second time domain units, where m is an integer greater than 1;
a sidelink channel resource and a SL PRS resource belonging to the same group in the time-frequency structure correspond to the same second time domain unit set, and the second time domain unit set includes at least three consecutive second time domain units; and
the sidelink channel resource and SL PRS resource belonging to the same group occupy different symbols in the second time domain unit set.

In some optional embodiments, the first second time domain unit in the second time domain unit set is used for AGC.

In some optional embodiments, the n SL PRS resources belong to at least two second time domain unit sets; and
SL PRS resources belonging to the same second time domain unit set correspond to the same second time domain unit set, and SL PRS resources belonging to different second time domain unit sets correspond to different second time domain unit sets.

In some embodiments, one or more groups of associated sidelink channel resources and SL PRS resources exist in the same second time domain unit set;
one SL PRS resource or a plurality of different SL PRS resources belonging to the same second time domain unit set are frequency-division multiplexed or code-division multiplexed when used for tramsmitting an SL PRS.
one or more sidelink channel resources belonging to the same second time domain unit set correspond to the same second time domain unit or the same plurality of second time domain units, at least two sidelink channel resources correspond to different frequency domain resources, and the at two least sidelink channel resources correspond to the same number of frequency domain resources.

In some optional embodiments, the number of the frequency domain resources corresponding to the one or more sidelink channel resources is configured by network, or pre-configured by network, or determined based on the number of the one or more sidelink channel resources and the number of frequency domain resources in the sidelink resource pool.

In some optional embodiments, different SL PRS resources in the same second time domain unit set have the same comb structure and different RE offsets.

In some optional embodiments, the one or more sidelink channel resources respectively correspond to the one or more SL PRS resources in the same second time domain unit set based on their respective indexes.

In some optional embodiments, the second time domain units corresponding to the one or more sidelink channel resources are consecutive to second time domain units corresponding to the one or more SL PRS resources in the same second time domain unit set;
alternatively, no second time domain unit used for transmit/receive transition exists between the second time domain units corresponding to the one or more sidelink channel resources and the second time domain units corresponding to one or more SL PRS resources in the same second time domain unit set.

In some optional embodiments, the next second time domain unit after the second time domain unit set is a second time domain unit used for transmit/receive transition;
alternatively, the next second time domain unit after the second time domain unit set is the first second time domain unit in the next second time domain unit set;
alternatively, in an autonomous resource selection mode, the next second time domain unit after the second time domain unit set is a second time domain unit used for transmit/receive transition.

In some optional embodiments, in a mode in which network schedules resources, in a case where a second condition is satisfied, the next second time domain unit after the second time domain unit set is the first second time domain unit in the next second time domain unit set.

In some optional embodiments, the second terminal is a receiving terminal, and the second condition includes at least one of the following:
that the second terminal is configured to receive the SL PRS within the next second time domain unit set for measuring RSTD; or
that the next second time domain unit set is configured for measuring RSTD.

In some optional embodiments, the next second time domain unit after the second time domain unit set is configured by network, or pre-configured by network, or defined by a communication protocol.

In some optional embodiments, if the second time domain unit set is an even-numbered second time domain unit set in the time-frequency structure, the second second time domain unit in the second time domain unit set corresponds to a sidelink channel resource, and the next second time domain unit after the second time domain unit set is the first second time domain unit in the next second time domain unit set;
if the second time domain unit set is an odd-numbered second time domain unit set in the time-frequency structure, the last second time domain unit in the second time domain unit set corresponds to a sidelink channel resource, and the next second time domain unit after the second time domain unit set is a second time domain unit used for transmit/receive transition;
second time domain unit sets in the time-frequency structure are indexed from 0 according to their order in time domain.

In some optional embodiments, the n groups of associated sidelink channel resources and SL PRS resources belong to the same sidelink resource pool.

In some optional embodiments, the n sidelink channel resources belong to a first sidelink resource pool, and the n SL PRS resources belong to a second sidelink resource pool.

In some optional embodiments, the n SL PRS resources belong to one or more SL PRS sets;
a second time domain unit used for transmit/receive transition exists between two adjacent SL PRS sets, and/or no second time domain unit used for transmit/receive transition exists between the two adjacent SL PRS sets.

In some optional embodiments, one or more SL PRS sets exist in a same first time domain unit, and different SL PRS sets correspond to different second time domain units.

In some optional embodiments, a plurality of SL PRS sets exist in the same first time domain unit; and
the last second time domain unit in the same first time domain unit is a second time domain unit used for transmit/receive transition.

In some optional embodiments, a plurality of SL PRS sets exist in the same first time domain unit;
the next second time domain unit after the preceding SL PRS set of two adjacent SL PRS sets is the first second time domain unit in the later SL PRS set of the two adjacent SL PRS sets;
alternatively, two adjacent SL PRS sets are configured for measuring RSTD, and the next second time domain unit after the preceding SL PRS set of the two adjacent SL PRS sets is the first second time domain unit in the latter SL PRS set of the two adjacent SL PRS sets;
alternatively, none of two adjacent SL PRS sets is configured for measuring RSTD, and the next second time domain unit after the preceding SL PRS set of the two adjacent SL PRS sets is a second time domain unit used for transmit/receive transition.

It should be noted that, in order to implement the functions of the apparatus provided in the above embodiments, the functional modules as divided above are only an example for illustration. In the actual application, the above functions may be implemented by different functional modules according to the actual need, that is, the content structure of the apparatus may be divided into different functional modules to complete all or part of the functions described above.

Regarding the apparatus in the above embodiments, the specific way in which each module performs operations has been described in detail in the method embodiments, and will not be elaborated here.

FIG. 17 is a schematic diagram of a structure of a terminal provided by an example not covered by the scope of the claims embedimentof the present disclosure. The terminal 1700 includes a processor 1701, a receiver 1702, a transmitter 1703, a memory 1704 and a bus 1705.

The processor 1701 includes one or more than one processing cores. The processor 1701 executes software programs and modules to implement various functional applications and information processing.

The receiver 1702 and the transmitter 1703 may be implemented through the same communication component, and the communication component may be a communication chip.

The memory 1704 is connected to the processor 1701 via the bus 1705. The memory 1704 may be configured to store at least one instruction, and the processor 1701 may be configured to execute the at least one instruction to implement each step in the above method embodiments.

In addition, the memory 1704 may be implemented by any type of volatile or non-volatile storage device or a combination thereof. The volatile or non-volatile storage device includes but is not limited to: a magnetic disk or an optical disk, an electrically erasable programmable read only memory (EEPROM), an erasable programmable read-only memory (EPROM), a static random -access memory (SRAM), a read-only memory (ROM), a magnetic storage device, a flash memory, and a programmable read-only memory (PROM).

Examples of the present disclosure not covered by the scope of the claims further provide a computer-readable storage medium, and the computer-readable storage medium stores a computer program. The computer program is used to be executed by a terminal to implement the above SL PRS transmitting method or SL PRS receiving method.

Optionally, the computer-readable storage medium may include: a read-only memory (ROM), a random-access memory (RAM), a solid-state drive (SSD), or an optical disk. The random access memory may include a resistance random access memory (ReRAM) and a dynamic random access memory (DRAM).

Examples of the present disclosure not covered by the scope of the claims further provide a chip, and the chip includes a programmable logic circuit and/or program instructions which, when run on a terminal equipped with the chip, cause the above SL PRS transmitting method or SL PRS receiving method to be implemented.

Examples of the present disclosure not covered by the scope of the claims further provide a computer program product or a computer program, which includes computer instructions, and the computer instructions are stored in a computer-readable storage medium. The terminal calls the computer instructions from the computer-readable storage medium and runs the computer instructions to implement the above SL PRS transmitting method or the SL PRS receiving method.

Those skilled in the art should be aware that in one or more of the above examples, the functions described in the embodiments of the present disclosure can be implemented by hardware, software, firmware or any combination thereof. When implemented using software, the functions may be stored in or transmitted as one or more instructions or codes on a computer-readable medium. Computer-readable media includes both computer storage media and communication media including any medium that facilitates transfer of a computer program from one place to another. Storage media may be any available media that can be accessed by a general purpose or special purpose computer.

The above description is only an optional embodiment of the present disclosure and is not intended to limit the present disclosure.

## Claims

1. A sidelink positioning reference signal, SL PRS, transmitting method, wherein the method is performed by a first terminal, and the method comprises:
transmitting (410, 401) first information on a first sidelink channel resource, and
transmitting (410, 401) a first SL PRS on a first SL PRS resource;
wherein the first information is used to indicate a transmission mode of SL PRSs on the first SL PRS resource,
wherein the first sidelink channel resource and the first SL PRS resource are a group of associated resources in a time-frequency structure;
wherein the time-frequency structure includes n groups of associated sidelink channel resources and SL PRS resources, and n is an integer greater than 1;
wherein the time-frequency structure corresponds to one or more first time domain units in time domain, each first time domain unit includes m second time domain units, and m is an integer greater than 1;
n sidelink channel resources and n SL PRS resources in the time-frequency structure correspond to different second time domain units;
the n sidelink channel resources correspond to a same plurality of second time domain units; and a plurality of second time domain units corresponding to a same SL PRS resource are consecutive in time domain;
wherein the n SL PRS resources belong to one or more SL PRS sets;
SL PRS resources belonging to a same SL PRS set correspond to a same plurality of second time domain units, and different SL PRS resources belonging to a same SL PRS set are frequency-division multiplexed or code-division multiplexed when used for transmitting an SL PRS;
SL PRS resources belonging to different SL PRS sets correspond to different plurality of second time domain units.

2. The method according to claim 1, wherein the n sidelink channel resources correspond to different frequency domain resources, and the n sidelink channel resources all correspond to a same number of frequency domain resources.

3. The method according to claim 2, wherein a starting point of frequency domain resources corresponding to the n sidelink channel resources is configured by network, or pre-configured by network, or determined based on frequency domain resources in a sidelink resource pool corresponding to the one or more first time domain units.

4. The method according to claim 2, wherein a number of frequency domain resources corresponding to each of the sidelink channel resources is configured by network, or pre-configured by network, or determined based on the number n and frequency domain resources in a sidelink channel resource pool.

5. The method according to claim 1, wherein the first second time domain unit of the plurality of second time domain units corresponding to the n sidelink channel resources is used for automatic gain control, AGC, and the first second time domain unit of the plurality of second time domain units corresponding to the same SL PRS resource is used for AGC.

6. The method according to claim 1, wherein different SL PRS resources in a same SL PRS set have a same comb structure and different resource element, RE, offsets; wherein
the n sidelink channel resources corresponds to the n SL PRS resources respectively based on their respective indexes.

7. The method according to any one of claims 1 to 6, wherein the plurality of second time domain units corresponding to the n sidelink channel resources are at least two consecutive second time domain units in a same first time domain unit; or
the plurality of second time domain units corresponding to the n sidelink channel resources are all second time domain units in a same first time domain unit.

8. The method according to claim 1 or 6, wherein second time domain units corresponding to the one or more SL PRS sets are consecutive; or
no second time domain unit used for transmit/receive transition exists between second time domain units corresponding to the one or more SL PRS sets.

9. The method according to any one of claims 1 to 6, wherein a last second time domain unit in the time-frequency structure is a second time domain unit used for transmit/receive transition; or
in an autonomous resource selection mode, a last second time domain unit in the time-frequency structure is a second time domain unit used for transmit/receive transition.

10. A sidelink positioning reference signal, SL PRS, receiving method, wherein the method is performed by a second terminal, and the method comprises:
receiving (510, 501) first information on a first sidelink channel resource, and
receiving (510, 501) a first SL PRS on a first SL PRS resource;
wherein the first information is used to indicate an SL PRS transmission mode of SL PRS on the first SL PRS resource,
wherein the first sidelink channel resource and the first SL PRS resource are a group of associated resources in a time-frequency structure;
wherein the time-frequency structure includes n groups of associated sidelink channel resources and SL PRS resources, and n is an integer greater than 1;
wherein the time-frequency structure corresponds to one or more first time domain units in time domain, each first time domain unit includes m second time domain units, and m is an integer greater than 1;
n sidelink channel resources and n SL PRS resources in the time-frequency structure correspond to different second time domain units;
the n sidelink channel resources correspond to a same plurality of second time domain units; and a plurality of second time domain units corresponding to a same SL PRS resource are consecutive in time domain,
wherein the n SL PRS resources belong to one or more SL PRS sets;
SL PRS resources belonging to a same SL PRS set correspond to a same plurality of second time domain units, and different SL PRS resources belonging to a same SL PRS set are frequency-division multiplexed or code-division multiplexed when used for transmitting an SL PRS;
SL PRS resources belonging to different SL PRS sets correspond to different plurality of second time domain units.

11. The method according to claim 10, wherein the n sidelink channel resources correspond to different frequency domain resources, and the n sidelink channel resources all correspond to a same number of frequency domain resources.

12. The method according to claim 11, wherein a starting point of frequency domain resources corresponding to the n sidelink channel resources is configured by network, or pre-configured by network, or determined based on frequency domain resources in a sidelink resource pool corresponding to the one or more first time domain units.

13. The method according to claim 11, wherein a number of frequency domain resources corresponding to each of the sidelink channel resources is configured by network, or pre-configured by network, or determined based on the number n and frequency domain resources in a sidelink channel resource pool.

14. A sidelink positioning reference signal, SL PRS, transmitting apparatus, wherein the apparatus comprises:
a transmitting module (1501), configured to transmit first information on a first sidelink channel resource and transmit a first SL PRS on a first SL PRS resource;
wherein the first information is used to indicate an SL PRS transmission mode on the first SL PRS resource,
wherein the first sidelink channel resource and the first SL PRS resource are a group of associated resources in a time-frequency structure;
wherein the time-frequency structure includes n groups of associated sidelink channel resources and SL PRS resources, and n is an integer greater than 1;
wherein the time-frequency structure corresponds to one or more first time domain units in time domain, each first time domain unit includes m second time domain units, and m is an integer greater than 1;
n sidelink channel resources and n SL PRS resources in the time-frequency structure correspond to different second time domain units;
the n sidelink channel resources correspond to a same plurality of second time domain units; and a plurality of second time domain units corresponding to a same SL PRS resource are consecutive in time domain;
wherein the n SL PRS resources belong to one or more SL PRS sets;
SL PRS resources belonging to a same SL PRS set correspond to a same plurality of second time domain units, and different SL PRS resources belonging to a same SL PRS set are frequency-division multiplexed or code-division multiplexed when used for transmitting an SL PRS;
SL PRS resources belonging to different SL PRS sets correspond to different plurality of second time domain units.

15. A sidelink positioning reference signal, SL PRS, receiving apparatus, wherein the apparatus comprises:
a receiving module (1601), configured to receive first information on a first sidelink channel resource and receive a first SL PRS on a first SL PRS resource;
wherein the first information is used to indicate an SL PRS transmission mode on the first SL PRS resource,
wherein the first sidelink channel resource and the first SL PRS resource are a group of associated resources in a time-frequency structure;
wherein the time-frequency structure includes n groups of associated sidelink channel resources and SL PRS resources, and n is an integer greater than 1;
wherein the time-frequency structure corresponds to one or more first time domain units in time domain, each first time domain unit includes m second time domain units, and m is an integer greater than 1;
n sidelink channel resources and n SL PRS resources in the time-frequency structure correspond to different second time domain units;
the n sidelink channel resources correspond to a same plurality of second time domain units; and a plurality of second time domain units corresponding to a same SL PRS resource are consecutive in time domain;
wherein the n SL PRS resources belong to one or more SL PRS sets;
SL PRS resources belonging to a same SL PRS set correspond to a same plurality of second time domain units, and different SL PRS resources belonging to a same SL PRS set are frequency-division multiplexed or code-division multiplexed when used for transmitting an SL PRS;
SL PRS resources belonging to different SL PRS sets correspond to different plurality of second time domain units.

## Patentansprüche

1. Sendeverfahren für ein Sidelink-Positionierungsreferenzsignal, SL PRS, wobei das Verfahren durch ein erstes Endgerät durchgeführt wird und wobei das Verfahren Folgendes umfasst:
Senden (410, 401) von ersten Informationen auf einer ersten Sidelink-Kanalressource und
Senden (410, 401) eines ersten SL PRS auf einer ersten SL PRS-Ressource;
wobei die ersten Informationen verwendet werden zum Angeben eines Sendemodus der SL PRSe auf der ersten SL PRS-Ressource,
wobei die erste Sidelink-Kanalressource und die erste SL PRS-Ressource eine Gruppe von assoziierten Ressourcen in einer Zeit-Frequenz-Struktur sind;
wobei die Zeit-Frequenz-Struktur n Gruppen von assoziierten Sidelink-Kanalressourcen und SL PRS-Ressourcen beinhaltet und n eine ganze Zahl größer als 1 ist;
wobei die Zeit-Frequenz-Struktur mit einer oder mehreren ersten Zeitbereichseinheiten im Zeitbereich korrespondiert, wobei jede erste Zeitbereichseinheit m zweite Zeitbereichseinheiten beinhaltet und m eine ganze Zahl größer als 1 ist;
wobei n Sidelink-Kanalressourcen und n SL PRS-Ressourcen in der Zeit-Frequenz-Struktur mit unterschiedlichen zweiten Zeitbereichseinheiten korrespondieren;
wobei die n Sidelink-Kanalressourcen mit einer selben Vielzahl von zweiten Zeitbereichseinheiten korrespondieren; und wobei eine Vielzahl von zweiten Zeitbereichseinheiten, korrespondierend einer selben SL PRS-Ressource, im Zeitbereich aufeinanderfolgen;
wobei die n SL PRS-Ressourcen zu einem oder mehreren SL PRS-Sätzen gehören;
wobei SL PRS-Ressourcen, die zu einem selben SL PRS-Satz gehören, mit einer selben Vielzahl von zweiten Zeitbereichseinheiten korrespondieren und verschiedene SL PRS-Ressourcen, die zu einem selben SL PRS-Satz gehören, frequenzmultiplext oder codemultiplext werden, wenn sie zum Senden eines SL PRS verwendet werden;
wobei SL PRS-Ressourcen, die zu verschiedenen SL PRS-Sätzen gehören, mit einer anderen Vielzahl von zweiten Zeitbereichseinheiten korrespondieren.

2. Verfahren nach Anspruch 1, wobei die n Sidelink-Kanalressourcen mit verschiedenen Frequenzbereichsressourcen korrespondieren und die n Sidelink-Kanalressourcen alle mit einer selben Anzahl von Frequenzbereichsressourcen korrespondieren.

3. Verfahren nach Anspruch 2, wobei ein Startpunkt von Frequenzbereichsressourcen, den n Sidelink-Kanalressourcen korrespondierend, netzkonfiguriert wird oder netzvorkonfiguriert wird oder bestimmt wird auf der Grundlage von Frequenzbereichsressourcen in einem Sidelink-Ressourcenpool, korrespondierend mit der einen oder den mehreren ersten Zeitbereichseinheiten.

4. Verfahren nach Anspruch 2, wobei eine Anzahl von Frequenzbereichsressourcen, korrespondierend mit jeder der Sidelink-Kanalressourcen, netzkonfiguriert oder netzvorkonfiguriert ist oder bestimmt wird auf der Grundlage der Anzahl n und der Frequenzbereichsressourcen in einem Sidelink-Kanalressourcenpool.

5. Verfahren nach Anspruch 1, wobei die erste zweite Zeitbereichseinheit aus der Vielzahl von zweiten Zeitbereichseinheiten, korrespondierend den n Sidelink-Kanalressourcen, für automatische Gewinnsteuerung bzw. Automatic Gain Control, AGC, verwendet wird und die erste zweite Zeitbereichseinheit aus der Vielzahl von zweiten Zeitbereichseinheiten, korrespondierend derselben SL PRS-Ressource, für AGC verwendet wird.

6. Verfahren nach Anspruch 1, wobei verschiedene SL PRS-Ressourcen in einem selben SL PRS-Satz eine selbe Kammstruktur und unterschiedliche Ressourcenelementversätze bzw. RE-Offsets aufweisen; wobei
die n Sidelink-Kanalressourcen den n SL PRS-Ressourcen korrespondieren, jeweils auf der Grundlage von deren jeweiligen Indices.

7. Verfahren nach einem der Ansprüche 1 bis 6, wobei die Vielzahl von zweiten Zeitbereichseinheiten, den n Sidelink-Kanalressourcen korrespondierend, mindestens zwei aufeinanderfolgende zweite Zeitbereichseinheiten in einer selben ersten Zeitbereichseinheit sind; oder
die Vielzahl von zweiten Zeitbereichseinheiten, den n Sidelink-Kanalressourcen korrespondierend, alle zweiten Zeitbereichseinheiten in einer selben ersten Zeitbereichseinheit sind.

8. Verfahren nach Anspruch 1 oder 6, wobei zweite Zeitbereichseinheiten, dem einen oder den mehreren SL PRS-Sätzen korrespondierend, aufeinanderfolgend sind oder
es keine für Sende-/Empfangs-Übergang verwendete Zeitbereichseinheit zwischen zweiten Zeitbereichseinheiten, dem einen oder den mehreren SL PRS-Sätzen korrespondierend, gibt.

9. Verfahren nach einem der Ansprüche 1 bis 6, wobei eine letzte zweite Zeitbereichseinheit in der Zeit-Frequenz-Struktur eine zweite Zeitbereichseinheit ist, die für Sende-/Empfangs-Übergang verwendet wird; oder
in einem Autonome-Ressourcenauswahl-Modus, eine letzte zweite Zeitbereichseinheit in der Zeit-Frequenz-Struktur eine zweite Zeitbereichseinheit ist, die für Sende-/Empfangs-Übergang verwendet wird.

10. Empfangsverfahren für ein Sidelink-Positionierungsreferenzsignal, SL PRS, wobei das Verfahren durch ein zweites Endgerät durchgeführt wird und das Verfahren Folgendes umfasst:
Empfangen (510, 501) von ersten Informationen auf einer ersten Sidelink-Kanalressource und
Empfangen (510, 501) eines ersten SL PRS auf einer ersten SL PRS-Ressource;
wobei die ersten Informationen verwendet werden zum Angeben eines SL PRS-Sendemodus von SL PRS auf der ersten SL PRS-Ressource,
wobei die erste Sidelink-Kanalressource und die erste SL PRS-Ressource eine Gruppe von assoziierten Ressourcen in einer Zeit-Frequenz-Struktur sind;
wobei die Zeit-Frequenz-Struktur n Gruppen von assoziierten Sidelink-Kanalressourcen und SL PRS-Ressourcen beinhaltet und n eine ganze Zahl größer als 1 ist;
wobei die Zeit-Frequenz-Struktur mit einer oder mehreren ersten Zeitbereichseinheiten im Zeitbereich korrespondiert, wobei jede erste Zeitbereichseinheit m zweite Zeitbereichseinheiten beinhaltet und m eine ganze Zahl größer als 1 ist;
wobei n Sidelink-Kanalressourcen und n SL PRS-Ressourcen in der Zeit-Frequenz-Struktur mit unterschiedlichen zweiten Zeitbereichseinheiten korrespondieren;
wobei die n Sidelink-Kanalressourcen mit einer selben Vielzahl von zweiten Zeitbereichseinheiten korrespondieren; und wobei eine Vielzahl von zweiten Zeitbereichseinheiten, korrespondierend einer selben SL PRS-Ressource, im Zeitbereich aufeinanderfolgen,
wobei die n SL PRS-Ressourcen zu einem oder mehreren SL PRS-Sätzen gehören;
wobei SL PRS-Ressourcen, die zu einem selben SL PRS-Satz gehören, mit einer selben Vielzahl von zweiten Zeitbereichseinheiten korrespondieren und verschiedene SL PRS-Ressourcen, die zu einem selben SL PRS-Satz gehören, frequenzmultiplext oder codemultiplext werden, wenn sie zum Senden eines SL PRS verwendet werden;
wobei SL PRS-Ressourcen, die zu verschiedenen SL PRS-Sätzen gehören, mit einer anderen Vielzahl von zweiten Zeitbereichseinheiten korrespondieren.

11. Verfahren nach Anspruch 10, wobei die n Sidelink-Kanalressourcen mit verschiedenen Frequenzbereichsressourcen korrespondieren und die n Sidelink-Kanalressourcen alle mit einer selben Anzahl von Frequenzbereichsressourcen korrespondieren.

12. Verfahren nach Anspruch 11, wobei ein Startpunkt von Frequenzbereichsressourcen, den n Sidelink-Kanalressourcen korrespondierend, netzkonfiguriert wird oder netzvorkonfiguriert wird oder bestimmt wird auf der Grundlage von Frequenzbereichsressourcen in einem Sidelink-Ressourcenpool, korrespondierend mit der einen oder den mehreren ersten Zeitbereichseinheiten.

13. Verfahren nach Anspruch 11, wobei eine Anzahl von Frequenzbereichsressourcen, korrespondierend jeder der Sidelink-Kanalressourcen, netzkonfiguriert oder netzvorkonfiguriert ist oder bestimmt wird auf der Grundlage der Anzahl n und der Frequenzbereichsressourcen in einem Sidelink-Kanalressourcenpool.

14. Sendeeinrichtung für ein Sidelink-Positionierungsreferenzsignal, SL PRS, wobei die Einrichtung Folgendes umfasst:
ein Sendemodul (1501), ausgelegt zum Senden erster Informationen auf einer ersten Sidelink-Kanalressource und Senden eines ersten SL PRS auf einer ersten SL PRS-Ressource;
wobei die ersten Informationen verwendet werden zum Angeben eines SL PRS-Sendemodus auf der ersten SL PRS-Ressource,
wobei die erste Sidelink-Kanalressource und die erste SL PRS-Ressource eine Gruppe von assoziierten Ressourcen in einer Zeit-Frequenz-Struktur sind;
wobei die Zeit-Frequenz-Struktur n Gruppen von assoziierten Sidelink-Kanalressourcen und SL PRS-Ressourcen beinhaltet und n eine ganze Zahl größer als 1 ist;
wobei die Zeit-Frequenz-Struktur mit einer oder mehreren ersten Zeitbereichseinheiten im Zeitbereich korrespondiert, wobei jede erste Zeitbereichseinheit m zweite Zeitbereichseinheiten beinhaltet und m eine ganze Zahl größer als 1 ist;
wobei n Sidelink-Kanalressourcen und n SL PRS-Ressourcen in der Zeit-Frequenz-Struktur mit unterschiedlichen zweiten Zeitbereichseinheiten korrespondieren;
wobei die n Sidelink-Kanalressourcen mit einer selben Vielzahl von zweiten Zeitbereichseinheiten korrespondieren; und wobei eine Vielzahl von zweiten Zeitbereichseinheiten, korrespondierend einer selben SL PRS-Ressource, im Zeitbereich aufeinanderfolgen;
wobei die n SL PRS-Ressourcen zu einem oder mehreren SL PRS-Sätzen gehören;
wobei SL PRS-Ressourcen, die zu einem selben SL PRS-Satz gehören, mit einer selben Vielzahl von zweiten Zeitbereichseinheiten korrespondieren und verschiedene SL PRS-Ressourcen, die zu einem selben SL PRS-Satz gehören, frequenzmultiplext oder codemultiplext werden, wenn sie zum Senden eines SL PRS verwendet werden;
wobei SL PRS-Ressourcen, die zu verschiedenen SL PRS-Sätzen gehören, mit einer anderen Vielzahl von zweiten Zeitbereichseinheiten korrespondieren.

15. Empfangseinrichtung für ein Sidelink-Positionierungsreferenzsignal, SL PRS, wobei die Einrichtung Folgendes umfasst:
ein Empfangsmodul (1601), ausgelegt zum Empfangen erster Informationen auf einer ersten Sidelink-Kanalressource und Empfangen eines ersten SL PRS auf einer ersten SL PRS-Ressource;
wobei die ersten Informationen verwendet werden zum Angeben eines SL PRS-Sendemodus auf der ersten SL PRS-Ressource,
wobei die erste Sidelink-Kanalressource und die erste SL PRS-Ressource eine Gruppe von assoziierten Ressourcen in einer Zeit-Frequenz-Struktur sind;
wobei die Zeit-Frequenz-Struktur n Gruppen von assoziierten Sidelink-Kanalressourcen und SL PRS-Ressourcen beinhaltet und n eine ganze Zahl größer als 1 ist;
wobei die Zeit-Frequenz-Struktur mit einer oder mehreren ersten Zeitbereichseinheiten im Zeitbereich korrespondiert, wobei jede erste Zeitbereichseinheit m zweite Zeitbereichseinheiten beinhaltet und m eine ganze Zahl größer als 1 ist;
wobei n Sidelink-Kanalressourcen und n SL PRS-Ressourcen in der Zeit-Frequenz-Struktur mit unterschiedlichen zweiten Zeitbereichseinheiten korrespondieren;
wobei die n Sidelink-Kanalressourcen einer selben Vielzahl von zweiten Zeitbereichseinheiten korrespondieren; und wobei eine Vielzahl von zweiten Zeitbereichseinheiten, korrespondierend einer selben SL PRS-Ressource, im Zeitbereich aufeinanderfolgen;
wobei die n SL PRS-Ressourcen zu einem oder mehreren SL PRS-Sätzen gehören;
wobei SL PRS-Ressourcen, die zu einem selben SL PRS-Satz gehören, mit einer selben Vielzahl von zweiten Zeitbereichseinheiten korrespondieren und verschiedene SL PRS-Ressourcen, die zu einem selben SL PRS-Satz gehören, frequenzmultiplext oder codemultiplext werden, wenn sie zum Senden eines SL PRS verwendet werden;
wobei SL PRS-Ressourcen, die zu verschiedenen SL PRS-Sätzen gehören, mit einer anderen Vielzahl von zweiten Zeitbereichseinheiten korrespondieren.

## Revendications

1. Procédé de transmission de signal de référence de positionnement de liaison latérale, SL-PRS, ce procédé étant effectué par un premier terminal, et ce procédé comprenant :
la transmission (410, 401) d'une première information sur une première ressource de canal de liaison latérale, et la transmission (410, 401) d'un premier signal SL-PRS sur une première ressource SL-PRS ;
cette première information étant utilisée pour indiquer un mode de transmission de signaux SL-PRS sur la première ressource SL-PRS,
la première ressource de canal de liaison latérale et la première ressource SL-PRS étant un groupe de ressources associées dans une structure temps-fréquence ;
cette structure temps-fréquence comprenant n groupes de ressources de canal de liaison latérale et de ressources SL-PRS associées, et n étant un nombre entier plus grand que 1 ;
la structure temps-fréquence correspondant à une ou plusieurs premières unités de domaine temporel dans le domaine temporel, chaque première unité de domaine temporel comprenant m deuxièmes unités de domaine temporel, et m étant un nombre entier plus grand que 1 ;
n ressources de canal de liaison latérale et n ressources SL-PRS dans la structure temps-fréquence correspondant à différentes deuxièmes unités de domaine temporel ;
les n ressources de canal de liaison latérale correspondant à une même pluralité de deuxièmes unités de domaine temporel ; et une pluralité de deuxièmes unités de domaine temporel correspondant à une même ressource SL-PRS étant consécutives dans le domaine temporel ;
les n ressources SL-PRS appartenant à un ou plusieurs ensembles de signaux SL-PRS ;
les ressources SL-PRS appartenant à un même ensemble de signaux SL-PRS correspondant à une même pluralité de deuxièmes unités de domaine temporel, et différentes ressources SL-PRS appartenant à un même ensemble de signaux SL-PRS étant multiplexées par répartition en fréquence ou multiplexées par répartition de code lorsqu'elles sont utilisées pour transmettre un signal SL-PRS ;
les ressources SL-PRS appartenant à différents ensembles de signaux SL-PRS correspondant à une pluralité différente de deuxièmes unités de domaine temporel.

2. Procédé selon la revendication 1, dans lequel les n ressources de canal de liaison latérale correspondent à différentes ressources de domaine fréquentiel, et les n ressources de canal de liaison latérale correspondent toutes à un même nombre de ressources de domaine fréquentiel.

3. Procédé selon la revendication 2, dans lequel un point de départ des ressources de domaine fréquentiel correspondant aux n ressources de canal de liaison latérale est configuré par réseau, ou préconfiguré par réseau, ou déterminé en se basant sur des ressources de domaine fréquentiel dans un pool de ressources de liaison latérale correspondant à la première unité de domaine temporel ou aux premières unités de domaine temporel.

4. Procédé selon la revendication 2, dans lequel un nombre de ressources de domaine fréquentiel correspondant à chacune des ressources de canal de liaison latérale est configuré par réseau, ou préconfiguré par réseau, ou déterminé en se basant sur le nombre n et sur des ressources de domaine fréquentiel dans un pool de ressources de canal de liaison latérale.

5. Procédé selon la revendication 1, dans lequel la première deuxième unité de domaine temporel parmi la pluralité de deuxièmes unités de domaine temporel correspondant aux n ressources de canal de liaison latérale est utilisée pour la commande automatique du gain, ACG, et la première deuxième unité de domaine temporel parmi la pluralité de deuxièmes unités de domaine temporel correspondant à la même ressource SL-PRS est utilisée pour la commande ACG.

6. Procédé selon la revendication 1, dans lequel différentes ressources SL-PRS dans un même ensemble de signaux SL-PRS ont une même structure en peigne et différents décalages d'éléments de ressource, RE ;
les n ressources de canal de liaison latérale correspondant aux n ressources SL-PRS respectivement en se basant sur leurs indices respectifs.

7. Procédé selon l'une quelconque des revendications 1 à 6, dans lequel la pluralité de deuxièmes unités de domaine temporel correspondant aux n ressources de canal de liaison latérale sont au moins deux deuxièmes unités de domaine temporel consécutives dans une même première unité de domaine temporel ; ou
la pluralité de deuxièmes unités de domaine temporel correspondant aux n ressources de canal de liaison latérale sont toutes des deuxièmes unités de domaine temporel dans une même première unité de domaine temporel.

8. Procédé selon la revendication 1 ou 6, dans lequel des deuxièmes unités de domaine temporel correspondant à l'ensemble de signaux SL-PRS ou aux ensembles de signaux SL-PRS sont consécutives ; ou
aucune deuxième unité de domaine temporel utilisée pour transmettre/recevoir une transition n'existe entre des deuxièmes unités de domaine temporel correspondant à l'ensemble ou aux ensembles de signaux SL-PRS.

9. Procédé selon l'une quelconque des revendications 1 à 6, dans lequel une dernière deuxième unité de domaine temporel dans la structure temps-fréquence est une deuxième unité de domaine temporel utilisée pour transmettre/recevoir une transition ; ou
dans un mode de sélection de ressource autonome, une dernière deuxième unité de domaine temporel dans la structure temps-fréquence est une deuxième unité de domaine temporel utilisée pour transmettre/recevoir une transition.

10. Procédé de réception de signal de référence de positionnement de liaison latérale, SL-PRS, ce procédé étant effectué par un deuxième terminal, et ce procédé comprenant :
la réception (510, 501) d'une première information sur une première ressource de canal de liaison latérale, et
la réception (510, 501) d'un premier signal SL-PRS sur une première ressource SL-PRS ;
la première information étant utilisée pour indiquer un mode de transmission SL-PRS de signal SL-PRS sur la première ressource SL-PRS,
la première ressource de canal de liaison latérale et la première ressource SL-PRS étant un groupe de ressources associées dans une structure temps-fréquence ;
cette structure temps-fréquence comprenant n groupes de ressources de canal de liaison latérale et de ressources SL-PRS, et n étant un nombre entier plus grand que 1 ;
la structure temps-fréquence correspondant à une ou plusieurs premières unités de domaine temporel dans le domaine temporel, chaque première unité de domaine temporel comprenant m deuxièmes unités de domaine temporel, et m étant un nombre entier plus grand que 1 ;
n ressources de canal de liaison latérale et n ressources SL-PRS dans la structure temps-fréquence correspondant à différentes deuxièmes unités de domaine temporel ;
les n ressources de canal de liaison latérale correspondant à une même pluralité de deuxièmes unités de domaine temporel ; et une pluralité de deuxièmes unités de domaine temporel correspondant à une même ressource SL-PRS étant consécutives dans le domaine temporel,
les n ressources SL-PRS appartenant à un ou plusieurs ensembles de signaux SL-PRS ;
les ressources SL-PRS appartenant à un même ensemble de signaux SL-PRS correspondant à une même pluralité de deuxièmes unités de domaine temporel, et différentes ressources SL-PRS appartenant à un même ensemble de signaux SL-PRS étant multiplexées par répartition en fréquence ou multiplexées par répartition de code lorsqu'elles sont utilisées pour transmettre un signal SL-PRS ;
les ressources SL-PRS appartenant à différents ensembles de signaux SL-PRS correspondant à une pluralité différente de deuxièmes unités de domaine temporel.

11. Procédé selon la revendication 10, dans lequel les n ressources de canal de liaison latérale correspondent à différentes ressources de domaine fréquentiel, et les n ressources de canal de liaison latérale correspondent toutes à un même nombre de ressources de domaine fréquentiel.

12. Procédé selon la revendication 11, dans lequel un point de départ des ressources de domaine fréquentiel correspondant aux n ressources de canal de liaison latérale est configuré par réseau, ou préconfiguré par réseau, ou déterminé en se basant sur des ressources de domaine fréquentiel dans un pool de ressources de liaison latérale correspondant à la première unité de domaine temporel ou aux premières unités de domaine temporel.

13. Procédé selon la revendication 11, dans lequel un nombre de ressources de domaine fréquentiel correspondant à chacune des ressources de canal de liaison latérale est configuré par réseau, ou préconfiguré par réseau, ou déterminé en se basant sur le nombre n et sur des ressources de domaine fréquentiel dans un pool de ressources de canal de liaison latérale.

14. Appareil de transmission de signal de positionnement de liaison latérale, SL-PRS, cet appareil comprenant :
un module de transmission (1501), configuré de façon à transmettre une première information sur une première ressource de canal de liaison latérale et à transmettre un premier signal SL-PRS sur une première ressource SL-PRS ;
cette première information étant utilisée pour indiquer un mode de transmission de signal SL-PRS sur la première ressource SL-PRS,
la première ressource de canal de liaison latérale et la première ressource SL-PRS étant un groupe de ressources associées dans une structure temps-fréquence ;
cette structure temps-fréquence comprenant n groupes de ressources de canal de liaison latérale et de ressources SL-PRS associées, et n étant un nombre entier plus grand que 1 ;
la structure temps-fréquence correspondant à une ou plusieurs premières unités de domaine temporel dans le domaine temporel, chaque première unité de domaine temporel comprenant m deuxièmes unités de domaine temporel, et m étant un nombre entier plus grand que 1 ;
n ressources de canal de liaison latérale et n ressources SL-PRS dans la structure temps-fréquence correspondant à différentes deuxièmes unités de domaine temporel ;
les n ressources de canal de liaison latérale correspondant à une même pluralité de deuxièmes unités de domaine temporel ; et une pluralité de deuxièmes unités de domaine temporel correspondant à une même ressource SL-PRS étant consécutives dans le domaine temporel ;
les n ressources SL-PRS appartenant à un ou plusieurs ensembles de signaux SL-PRS ;
les ressources SL-PRS appartenant à un même ensemble de signaux SL-PRS correspondant à une même pluralité de deuxièmes unités de domaine temporel, et différentes ressources SL-PRS appartenant à un même ensemble de signaux SL-PRS étant multiplexées par répartition en fréquence ou multiplexées par répartition de code lorsqu'elles sont utilisées pour transmettre un signal SL-PRS ;
les ressources SL-PRS appartenant à différents ensembles de signaux SL-PRS correspondant à une pluralité différente de deuxièmes unités de domaine temporel.

15. Appareil de réception de signal de positionnement de liaison latérale, SL-PRS, cet appareil comprenant :
un module de réception (1601), configuré de façon à recevoir une première information sur une première ressource de canal de liaison latérale et à recevoir un premier signal SL-PRS sur une première ressource SL-PRS ;
cette première information étant utilisée pour indiquer un mode de transmission de signaux SL-PRS sur la première ressource SL-PRS,
la première ressource de canal de liaison latérale et la première ressource SL-PRS étant un groupe de ressources associées dans une structure temps-fréquence ;
cette structure temps-fréquence comprenant n groupes de ressources de canal de liaison latérale et de ressources SL-PRS associées, et n étant un nombre entier plus grand que 1 ;
la structure temps-fréquence correspondant à une ou plusieurs unités de domaine temporel dans le domaine temporel, chaque première unité de domaine temporel comprenant m deuxièmes unités de domaine temporel, et m étant un nombre entier plus grand que 1 ;
n ressources de canal de liaison latérale et n ressources SL-PRS dans la structure temps-fréquence correspondant à différentes deuxièmes unités de domaine temporel ;
les n ressources de canal de liaison latérale correspondant à une même pluralité de deuxièmes unités de domaine temporel ; et une pluralité de deuxièmes unités de domaine temporel correspondant à une même ressource SL-PRS étant consécutives dans le domaine temporel ;
les n ressources SL-PRS appartenant à un ou plusieurs ensembles de signaux SL-PRS ;
les ressources SL-PRS appartenant à un même ensemble de signaux SL-PRS correspondant à une même pluralité de deuxièmes unités de domaine temporel, et différentes ressources SL-PRS appartenant à un même ensemble de signaux SL-PRS étant multiplexées par répartition en fréquence ou multiplexées par répartition de code lorsqu'elles sont utilisées pour transmettre un signal SL-PRS ;
les ressources SL-PRS appartenant à différents ensembles de signaux SL-PRS correspondant à une pluralité différente de deuxièmes unités de domaine temporel.
